(19) Europäisches Patentamt
European Patent Office
Office européen des brevets

(11) EP 4 349 612 A1

(12) EUROPEAN PATENT APPLICATION
published in accordance with Art. 153(4) EPC

(43) Date of publication:
**10.04.2024 Bulletin 2024/15**

(21) Application number: **22810917.9**

(22) Date of filing: **08.03.2022**

(51) International Patent Classification (IPC):
***B60C 1/00*** *(2006.01)* ***C08C 19/25*** *(2006.01)*
***C08L 7/00*** *(2006.01)* ***C08L 9/00*** *(2006.01)*
***C08L 15/00*** *(2006.01)* ***C08L 57/00*** *(2006.01)*
***C08L 101/00*** *(2006.01)* ***C08K 3/04*** *(2006.01)*
***C08K 3/36*** *(2006.01)*

(52) Cooperative Patent Classification (CPC):
**B60C 1/00; C08C 19/25; C08K 3/04; C08K 3/36; C08L 7/00; C08L 9/00; C08L 15/00; C08L 57/00; C08L 101/00;** Y02T 10/86

(86) International application number:
**PCT/JP2022/010133**

(87) International publication number:
**WO 2022/249636 (01.12.2022 Gazette 2022/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.05.2021 JP 2021090700**

(71) Applicant: **BRIDGESTONE CORPORATION**
**Chuo-ku**
**Tokyo 104-8340 (JP)**

(72) Inventor: **ITO, Nahoko**
**Tokyo 104-8340 (JP)**

(74) Representative: **Marks & Clerk LLP**
**15 Fetter Lane**
**London EC4A 1BW (GB)**

# (54) RUBBER COMPOSITION FOR TIRE, TREAD RUBBER, AND TIRE

(57) The technical problem of this disclosure is to provide a tire rubber composition capable of achieving a high degree of compatibility between the wet gripping performance and the fuel efficiency of a tire. The solution is a tire rubber composition containing: a rubber component containing an isoprene skeleton rubber and a modified styrene-butadiene rubber with a bound styrene content of 15% by mass or less; a hydrogenated resin having a softening point of higher than 100°C and a weight-average molecular weight in terms of polystyrene (g/mol) of greater than 1200 and 1600 or less; silica; and carbon black, wherein a percentage of silica in the total amount of said silica and said carbon black is 50% by mass or more and less than 100% by mass.



Processed by Luminess, 75001 PARIS (FR)

## Description

TECHNICAL FIELD

This disclosure relates to a tire rubber composition, a tread rubber, and a tire.

BACKGROUND

From the standpoint of improving vehicle safety, various studies have been conducted to improve the gripping performance of tires on dry and wet road surfaces. For example, the following PTL 1 (WO 2015/079703 A1) discloses that the application of a rubber composition comprising a rubber component containing 70% by mass or more of natural rubber, a thermoplastic resin, and a filler including silica, to a tire tread rubber, improves the gripping performance of the tire on both dry and wet road surfaces.

On the other hand, there is a growing demand for more fuel-efficient automobiles in connection with the global movement to regulate carbon dioxide emissions in response to the recent increase in interest in environmental issues. In order to meet such demands, tire performance is also required to improve fuel efficiency (i.e., reduction of rolling resistance).

CITATION LIST

Patent Literature

PTL 1: WO 2015/079703 A1

SUMMARY

(Technical Problem)

However, the present inventor found, as a result of examination, that although the technology described in the above-mentioned PTL 1 can improve the gripping performance of tires on wet road surfaces (hereinafter, referred to as the "wet gripping performance"), there is room for further improvement in terms of a high degree of compatibility with fuel efficiency.

It is therefore an object of this disclosure to solve the problem of the conventional technologies described above, and to provide a tire rubber composition capable of achieving a high degree of compatibility between the wet gripping performance and the fuel efficiency of tires, and a tread rubber comprising such a rubber composition.

In addition, it is a further object of this disclosure to provide a tire with a high degree of compatibility between the wet gripping performance and the fuel efficiency.

(Solution to Problem)

The gist structure of this disclosure, which solves the above technical problem, is as follows.

A tire rubber composition according to this disclosure contains,

a rubber component containing an isoprene skeleton rubber and a modified styrene-butadiene rubber with a bound styrene content of 15% by mass or less;
a hydrogenated resin having a softening point of higher than 100°C and a weight-average molecular weight in terms of polystyrene (g/mol) of greater than 1200 and 1600 or less;
silica; and
carbon black,
wherein a percentage of silica in the total amount of said silica and said carbon black is 50% by mass or more and less than 100% by mass.

Further, a tread rubber according to this disclosure comprises the aforementioned tire rubber composition.

Furthermore, a tire according to this disclosure comprises the aforementioned tread rubber.

(Advantageous Effect)

According to this disclosure, it is possible to provide a tire rubber composition capable of achieving a high

degree of compatibility between the wet gripping performance and the fuel efficiency of tires, and a tread rubber comprising such a rubber composition.

In addition, according to this disclosure, it is possible to provide a tire with a high degree of compatibility between the wet gripping performance and the fuel efficiency.

DETAILED DESCRIPTION

Hereinafter, the tire rubber composition, tread rubber, and tire of this disclosure will be illustrated in detail based on the embodiments thereof.

<Tire rubber composition>

The tire rubber composition according to this disclosure contains a rubber component, a hydrogenated resin, silica, and carbon black. The tire rubber composition of this disclosure is characterized in that; the rubber component contains an isoprene skeleton rubber and a modified styrene-butadiene rubber with a bound styrene content of 15% by mass or less, the hydrogenated resin has a softening point of higher than 100°C and a weight-average molecular weight in terms of polystyrene (g/mol) of greater than 1200 and 1600 or less, and a percentage of silica in the total amount of the silica and the carbon black is 50% by mass or more and less than 100% by mass.

In the tire rubber composition according to this disclosure, the isoprene skeleton rubber, and the modified styrene-butadiene rubber with a bound styrene content of 15% by mass or less contained in the rubber component contribute to the wet gripping performance and the fuel efficiency of tires to which the rubber composition is applied. In particular, the fuel efficiency of tires to which the rubber composition is applied can be further improved when the bound styrene content in the modified styrene-butadiene rubber is 15% by mass or less.

In addition, the hydrogenated resin having a softening point of higher than 100°C and a weight-average molecular weight in terms of polystyrene (g/mol) of greater than 1200 and 1600 or less is highly compatible with the rubber component containing the isoprene skeleton rubber and the modified styrene-butadiene rubber with the bound styrene content of 15% by mass or less, which can control the mobility of the rubber component and improve the hysteresis loss (tan $\delta$) in the low temperature range. Therefore, the wet gripping performance of tires to which the rubber composition is applied can be improved.

Further, the silica and the carbon black also contribute to reinforcement properties of the rubber composition. Furthermore, since the percentage of silica in the total amount of the silica and the carbon black is 50% by mass or more, the wet gripping performance and the fuel efficiency of tires to which the rubber composition is applied can be improved.

Therefore, when applied to tires, the tire rubber composition according to this disclosure can achieve a high degree of both wet gripping performance and fuel efficiency of the tires.

(Rubber component)

The tire rubber composition according to this disclosure contains a rubber component containing an isoprene skeleton rubber and a modified styrene-butadiene rubber with a bound styrene content of 15% by mass or less, and may further contain other rubber components.

- Isoprene skeleton rubber -

The aforementioned isoprene skeleton rubber is a rubber with an isoprene unit as a main skeleton, and specific examples thereof include natural rubber (NR), synthetic isoprene rubber (IR), and the like.

Since the rubber component contains the isoprene skeleton rubber, the fracture strength of the rubber composition can be increased. As a result, the rolling resistance of tires to which the rubber composition is applied can be reduced to improve fuel efficiency.

The content of the isoprene skeleton rubber is preferably 1 to 80 parts by mass, and more preferably 1 to 40 parts by mass in 100 parts by mass of the rubber component. When the content of the isoprene skeleton rubber is 1 to 80 parts by mass in 100 parts by mass of the rubber component, the fuel efficiency and the wet gripping performance of tires to which the rubber composition is applied can be further improved. In addition, when the content of the isoprene skeleton rubber is 1 to 40 parts by mass in 100 parts by mass of the rubber component, the fuel efficiency and the wet gripping performance of tires to which the rubber composition is applied can be further improved even more. From the viewpoint of increasing the compounding effect of the isoprene skeleton rubber, it is even more preferred that the content of the isoprene skeleton rubber is 10 parts by mass or more in 100 parts by mass of the rubber component.

- Modified styrene-butadiene rubber -

The aforementioned modified styrene-butadiene rubber (modified SBR) is a modified rubber of the styrene-butadiene rubber (SBR), and with a bound styrene content of 15% by mass or less. The bound styrene content in the modified styrene-butadiene rubber means the percentage of styrene units in the modified styrene-butadiene rubber. When the bound styrene content in the modified styrene-butadiene rubber is 15% by mass or less, the fuel efficiency of tires to which the rubber composition is applied can be further improved. The bound styrene content in the modified styrene-butadiene rubber is preferably 14% by mass or less, more preferably 13% by mass or less, and even more preferably 12% by mass or less, in terms of the fuel efficiency of tires. In addition, the bound styrene content in the modified styrene-butadiene rubber is preferably 5% by mass or more, more preferably 7% by mass or more, and even more preferably 8% by mass or more, in terms of the wet gripping performance of tires to which the rubber composition is applied.

The bound styrene content in the modified styrene-butadiene rubber can be adjusted by the amount of monomer used for polymerization of the modified styrene-butadiene rubber, and the degree of polymerization, etc.

The content of the modified styrene-butadiene rubber is preferably from 20 to 99 parts by mass, and more preferably from 60 to 99 parts by mass in 100 parts by mass of the rubber component. When the content of the modified styrene-butadiene rubber is 60 to 99 parts by mass in 100 parts by mass of the rubber component, the fuel efficiency and the wet gripping performance of tires to which the tire rubber composition is applied can be further improved.

The modified styrene-butadiene rubber is preferably modified with a modifying agent having a functional group containing a nitrogen atom and an alkoxy group. When the modified styrene-butadiene rubber is modified with a modifying agent having a functional group containing a nitrogen atom and an alkoxy group, the balance between the wet gripping performance and the fuel efficiency of tires to which the rubber composition is applied can be further improved, especially in terms of the fuel efficiency.

The modifying agent having a functional group containing a nitrogen atom and an alkoxy group is a generic term for a modifying agent having at least one functional group containing a nitrogen atom and at least one alkoxy group.

The functional group containing a nitrogen atom is preferably selected from the following.

The monovalent hydrocarbon group having 1 to 30 carbon atoms, which includes the linear, branched, alicyclic or aromatic ring, and has a functional group selected from the group consisting of primary amino group, primary amino group protected with a hydrolyzable protecting group, onium salt residue of primary amine, isocyanate group, thioisocyanate group, imine group, imine residue, amide group, secondary amino group protected with hydrolyzable protecting group, cyclic secondary amino group, onium salt residue of cyclic second amine, acyclic second amino group, onium salt residue of acyclic second amine, isocyanurate triester residue, cyclic tertiary amino group, acyclic tertiary amino group, nitrile group, pyridine residue, onium salt residue of cyclic tertiary amine, and onium salt residue of acyclic tertiary amine; or the monovalent hydrocarbon group having 1 to 30 carbon atoms, including linear, branched, alicyclic or aromatic ring, which may contain at least one heteroatom selected from oxygen, sulfur and phosphorus atoms.

-- Modified styrene-butadiene rubber in the first suitable aspect --

The modified styrene-butadiene rubber (modified SBR) is preferably modified with an aminoalkoxysilane compound, and from the viewpoint of having high affinity for fillers, it is even more preferred that a terminal thereof is modified with an aminoalkoxysilane compound. When the terminal of the styrene-butadiene rubber is modified with an aminoalkoxysilane compound, the interaction between the modified styrene-butadiene rubber and the filler (especially, silica) is particularly significant.

The modification point of the modified styrene-butadiene rubber may be the molecular terminal, as described above, or it may be a main chain.

The styrene-butadiene rubber with a modified molecular terminal can be produced by reacting various modifying agents with the terminal of the styrene-butadiene copolymer having an active terminal according to the methods described, for example, in WO 2003/046020 A1 and JP 2007-217562 A.

In one suitable aspect, the styrene-butadiene rubber with the modified molecular terminal is produced, according to the method described in WO 2003/046020 A1 and JP 2007-217562 A, by reacting the terminal of the styrene-butadiene copolymer with an active terminal having a cis-1,4-bond content of 75% or more with an aminoalkoxysilane compound, followed by reacting with a carboxylic acid partial ester of a polyhydric alcohol to stabilize it.

The carboxylic acid partial ester of a polyhydric alcohol is an ester of polyhydric alcohol and carboxylic acid, and refers to a partial ester having one or more hydroxyl groups. Specifically, esters of saccharide or modified saccharide having 4 or more carbon atoms and fatty acids are preferably used. These esters are more preferably (1) fatty acid partial esters of polyhydric alcohols, in particular, partial esters of saturated or unsaturated higher fatty acids having 10 to 20 carbon atoms and polyhydric alcohols (either monoester, diester, or triester may be used), (2) ester compounds consisting of 1 to 3 partial esters of polyvalent carboxylic acids and higher alcohols bound to polyvalent alcohols, and

the like.

As the polyhydric alcohols used as raw materials for partial esters are preferably saccharides having 5 or 6 carbon atoms having at least three hydroxyl groups (may be hydrogenated or non-hydrogenated), glycols, or polyhydroxy compounds. The raw fatty acids are preferably saturated or unsaturated fatty acids having 10 to 20 carbon atoms, for example, stearic acid, lauric acid, and palmitic acid are used.

Among fatty acid partial esters of polyhydric alcohols, sorbitan fatty acid esters are preferred, specifically examples thereof include sorbitan monolaurate esters, sorbitan monopalmitate esters, sorbitan monostearate esters, sorbitan tristearate esters, sorbitan monooleate esters, and sorbitan trioleate esters, and the like.

The aforementioned aminoalkoxysilane compound is not particularly limited, however, an aminoalkoxysilane compound represented by the following general formula (i) is preferred.

$$R^{11}_{a}\text{-Si-}(OR^{12})_{4-a} \cdots \qquad (i)$$

In the general formula (i), $R^{11}$ and $R^{12}$ each independently represent a monovalent aliphatic hydrocarbon group with 1 to 20 carbons or a monovalent aromatic hydrocarbon group having 6 to 18 carbons, at least one of $R^{11}$ and $R^{12}$ is substituted with an amino group, "a" is an integer from 0 to 2, and if there is more than one $OR^{12}$, each $OR^{12}$ may be identical or different from each other, and the molecule does not contain an active proton.

An aminoalkoxysilane compound represented by the following general formula (ii) is also preferred as the above aminoalkoxysilane compound.

[Chem. 1]

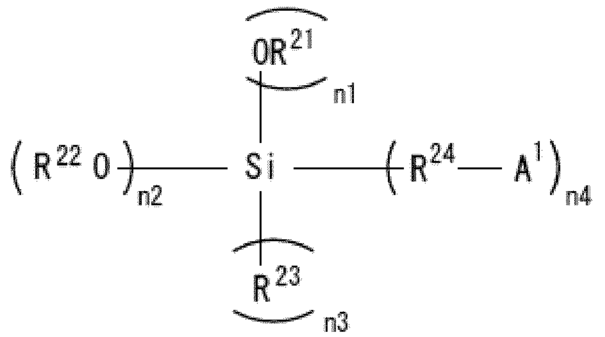

· · · · ( ii )

In the general formula (ii), n1 + n2 + n3 + n4 = 4 (where n2 is an integer from 1 to 4, and n1, n3 and n4 are integers from 0 to 3).

$A^1$ is at least one functional group selected from a saturated cyclic tertiary amine compound residue, an unsaturated cyclic tertiary amine compound residue, a ketimine residue, a nitrile group, a (thio)isocyanate group, an isocyanurate trihydrocarbyl ester group, a nitrile group, a pyridine group, a (thio)ketone group, an amide group, and a primary or secondary amino group with hydrolyzable group. When n4 is 2 or more, $A^1$ may be the identical or different from each other, and $A^1$ may be a divalent group bound to Si to form a cyclic structure.

$R^{21}$ is a monovalent aliphatic or alicyclic hydrocarbon group having 1 to 20 carbon atoms, or a monovalent aromatic hydrocarbon group having 6 to 18 carbon atoms. When n1 is 2 or more, $R^{21}$ may be identical or different from each other.

$R^{22}$ is a monovalent aliphatic or alicyclic hydrocarbon group having 1 to 20 carbon atoms, or a monovalent aromatic hydrocarbon group having 6 to 18 carbon atoms, and any of them may contain nitrogen and/or silicon atoms. When n2 is 2 or more, $R^{22}$ may be identical or different from each other, or together they may form a ring.

$R^{23}$ is a monovalent aliphatic or alicyclic hydrocarbon group having 1 to 20 carbon atoms, a monovalent aromatic hydrocarbon group having 6 to 18 carbon atoms, or a halogen atom. When n3 is 2 or more, $R^{23}$ may be identical or different from each other.

$R^{24}$ is a divalent aliphatic or alicyclic hydrocarbon group having 1 to 20 carbon atoms or a divalent aromatic hydrocarbon group having 6 to 18 carbon atoms. When n4 is 2 or more, $R^{24}$ may be identical or different from each other.

As the hydrolyzable group in the first or second amino group with hydrolyzable group, a trimethylsilyl group or a tert-butyldimethylsilyl group are preferred, and the trimethylsilyl group is particularly preferred.

The aminoalkoxysilane compound represented by the above general formula (ii) is preferably an aminoalkoxysilane compound represented by the following general formula (iii).

[Chem. 2]

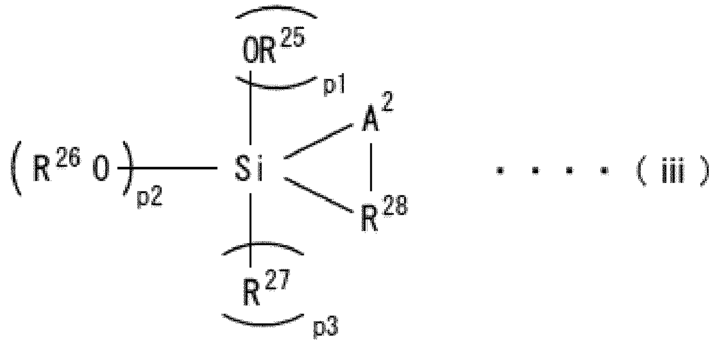

In the general formula (iii), p1 + p2 + p3 = 2 (where p2 is an integer from 1 to 2, and p1 and p3 are integers from 0 to 1).

$A^2$ is NRa (Ra is a monovalent hydrocarbon group, a hydrolyzable group, or a nitrogen-containing organic group).

$R^{25}$ is a monovalent aliphatic or alicyclic hydrocarbon group having 1 to 20 carbon atoms, or a monovalent aromatic hydrocarbon group having 6 to 18 carbon atoms.

$R^{26}$ is a monovalent aliphatic or alicyclic hydrocarbon group having 1 to 20 carbon atoms, a monovalent aromatic hydrocarbon group having 6 to 18 carbon atoms, or a nitrogen-containing organic group, and any of them may contain nitrogen and/or silicon atoms. When p2 is 2, $R^{26}$ may be identical or different from each other, or together they may form a ring.

$R^{27}$ is a monovalent aliphatic or alicyclic hydrocarbon group having 1 to 20 carbon atoms, a monovalent aromatic hydrocarbon group having 6 to 18 carbon atoms, or a halogen atom.

$R^{28}$ is a divalent aliphatic or alicyclic hydrocarbon group having 1 to 20 carbon atoms, or a divalent aromatic hydrocarbon group having 6 to 18 carbon atoms.

As the hydrolyzable group, a trimethylsilyl group or a tert-butyldimethylsilyl group are preferred, and the trimethylsilyl group is particularly preferred.

The aminoalkoxysilane compound represented by the above general formula (ii) is also preferably an aminoalkoxysilane compound represented by the following general formula (iv) or (v).

[Chem. 3]

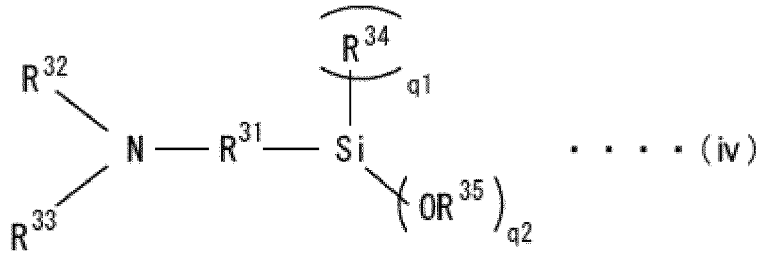

In the general formula (iv), q1 + q2 = 3 (where q1 is an integer from 0 to 2, and q2 is an integer from 1 to 3).

$R^{31}$ is a divalent aliphatic or alicyclic hydrocarbon group having 1 to 20 carbon atoms, or a divalent aromatic hydrocarbon group having 6 to 18 carbon atoms.

$R^{32}$ and $R^{33}$ are each independently a hydrolyzable group, a monovalent aliphatic or alicyclic hydrocarbon group having 1 to 20 carbon atoms, or a monovalent aromatic hydrocarbon group having 6 to 18 carbon atoms.

$R^{34}$ is a monovalent aliphatic or alicyclic hydrocarbon group having 1 to 20 carbon atoms, or a monovalent aromatic hydrocarbon group having 6 to 18 carbon atoms. When q1 is 2, $R^{34}$ may be identical or different from each other.

$R^{35}$ is a monovalent aliphatic or alicyclic hydrocarbon group having 1 to 20 carbon atoms, or a monovalent aromatic hydrocarbon group having 6 to 18 carbon atoms. When q2 is 2 or more, $R^{35}$ may be identical or different from each other.

[Chem. 4]

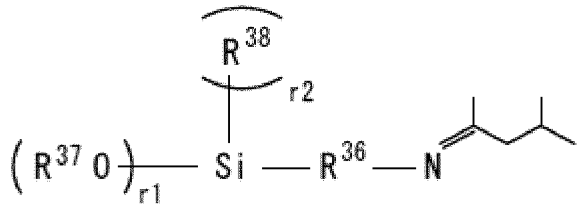

. . . . (v)

In the general formula (v), r1 + r2 = 3 (where r1 is an integer from 1 to 3, and r2 is an integer from 0 to 2).

$R^{36}$ is a divalent aliphatic or alicyclic hydrocarbon group having 1 to 20 carbon atoms, or a divalent aromatic hydrocarbon group having 6 to 18 carbon atoms.

$R^{37}$ is a dimethylaminomethyl group, a dimethylaminoethyl group, a diethylaminomethyl group, a diethylaminoethyl group, a methylsilyl(methyl)aminomethyl group, a methylsilyl(methyl)aminoethyl group, a methylsilyl(ethyl)aminomethyl group, a methylsilyl(ethyl)aminoethyl group, a dimethylsilyl aminomethyl group, a dimethylsilyl aminoethyl group, a monovalent aliphatic or alicyclic hydrocarbon group having 1 to 20 carbon atoms, or a monovalent aromatic hydrocarbon group having 6 to 18 carbon atoms. When r1 is 2 or more, $R^{37}$ may be identical or different from each other.

$R^{38}$ is a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms. When r2 is 2, $R^{38}$ may be identical or different from each other.

A specific example of an aminoalkoxysilane compound represented by the general formula (v) includes N-(1,3-dimethylbutylidene)-3-triethoxysilyl-1-propanamine.

The aminoalkoxysilane compound represented by the above general formula (ii) is also preferably an aminoalkoxysilane compound represented by the following general formula (vi) or (vii).

[Chem. 5]

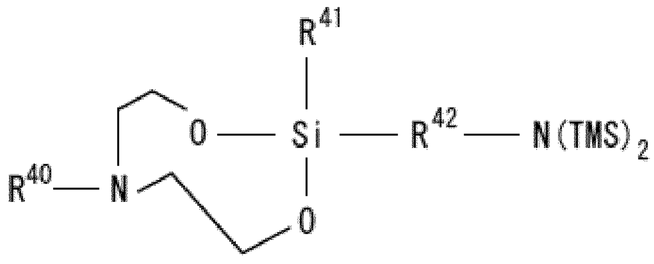

. . . . (vi)

In the general formula (vi), $R^{40}$ is a trimethylsilyl group, a monovalent aliphatic or alicyclic hydrocarbon group having 1 to 20 carbon atoms, or a monovalent aromatic hydrocarbon group having 6 to 18 carbon atoms.

$R^{41}$ is a hydrocarbyloxy group having 1 to 20 carbon atoms, a monovalent aliphatic or alicyclic hydrocarbon group having 1 to 20 carbon atoms, or an aromatic hydrocarbon group having 6 to 18 carbon atoms.

$R^{42}$ is a divalent aliphatic or alicyclic hydrocarbon group having 1 to 20 carbon atoms, or a divalent aromatic hydrocarbon group having 6 to 18 carbon atoms.

The TMS indicates a trimethylsilyl group (hereafter, the same applies).

[Chem. 6]

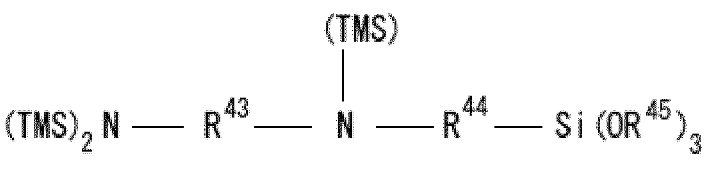

. . . . (vii)

In the general formula (vii), $R^{43}$ and $R^{44}$ are each independently a divalent aliphatic or alicyclic hydrocarbon group having 1 to 20 carbon atoms, or a divalent aromatic hydrocarbon group having 6 to 18 carbon atoms.

$R^{45}$ is a monovalent aliphatic or alicyclic hydrocarbon group having 1 to 20 carbon atoms, or a monovalent aromatic hydrocarbon group having 6 to 18 carbon atoms, each $R^{45}$ may be identical or different from each other.
The aminoalkoxysilane compound represented by the above general formula (ii) is also preferably an aminoalkoxysilane compound represented by the following general formula (viii) or (ix).

[Chem. 7]

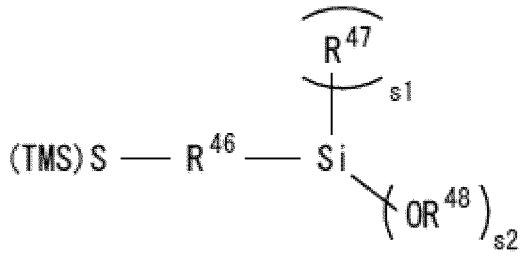

・・・・(viii)

In the general formula (viii), s1 + s2 is 3 (provided that s1 is an integer from 0 to 2, and s2 is an integer from 1 to 3).
$R^{46}$ is a divalent aliphatic or alicyclic hydrocarbon group having 1 to 20 carbon atoms, or a divalent aromatic hydrocarbon group having 6 to 18 carbon atoms.
$R^{47}$ and $R^{48}$ are each independently a monovalent aliphatic or alicyclic hydrocarbon group having 1 to 20 carbon atoms, or a monovalent aromatic hydrocarbon group having 6 to 18 carbon atoms. Two or more of $R^{47}$ or $R^{48}$ may be identical or different from each other.

[Chem. 8]

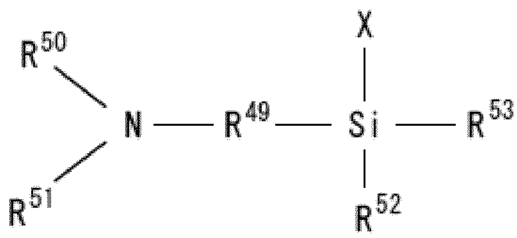

・・・・(ix)

In the general formula (ix), X is a halogen atom.
$R^{49}$ is a divalent aliphatic or alicyclic hydrocarbon group having 1 to 20 carbon atoms, or a divalent aromatic hydrocarbon group having 6 to 18 carbon atoms.
$R^{50}$ and $R^{51}$ are each independently a hydrolyzable group, a monovalent aliphatic or alicyclic hydrocarbon group having 1 to 20 carbon atoms, or a monovalent aromatic hydrocarbon group having 6 to 18 carbon atoms; or $R^{50}$ and $R^{51}$ are combined to form a divalent organic group.
$R^{52}$ and $R^{53}$ are each independently a halogen atom, a hydrocarbyloxy group, a monovalent aliphatic or alicyclic hydrocarbon group having 1 to 20 carbon atoms, or a monovalent aromatic hydrocarbon group having 6 to 18 carbon atoms.
$R^{50}$ and $R^{51}$ are preferably the hydrolyzable groups, and as the hydrolyzable groups, trimethylsilyl group and tert-butyldimethylsilyl group are preferred, and the trimethylsilyl group is particularly preferred.
The aminoalkoxysilane compound represented by the above general formula (ii) is also preferably an aminoalkoxysilane compound represented by the following general formulas (x), (xi), (xii) or (xiii).

[Chem. 9]

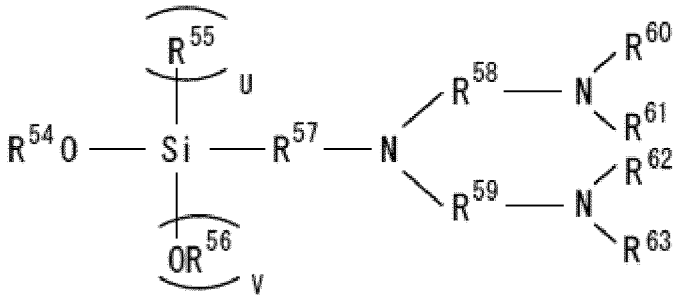

· · · · (x)

[Chem. 10]

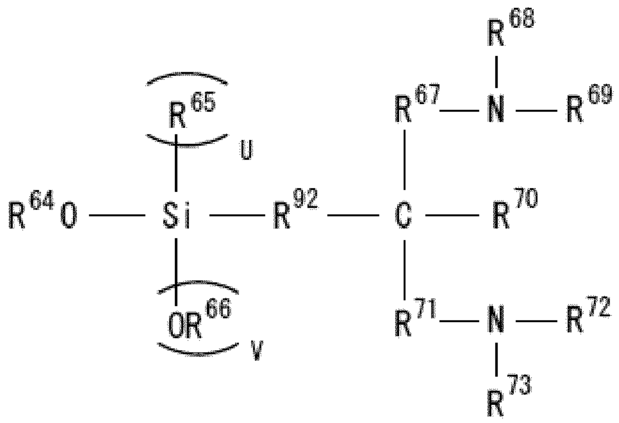

· · · · (xi)

[Chem. 11]

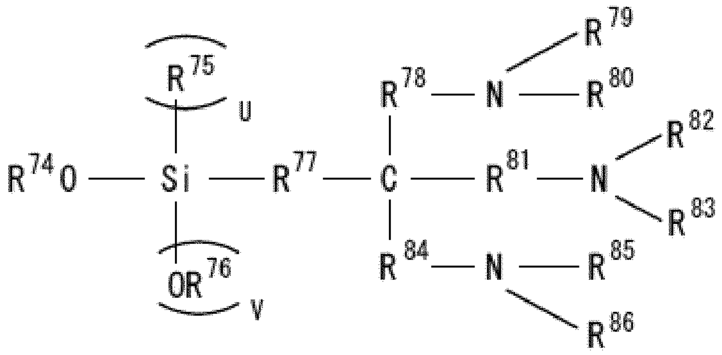

· · · · (xii)

[Chem. 12]

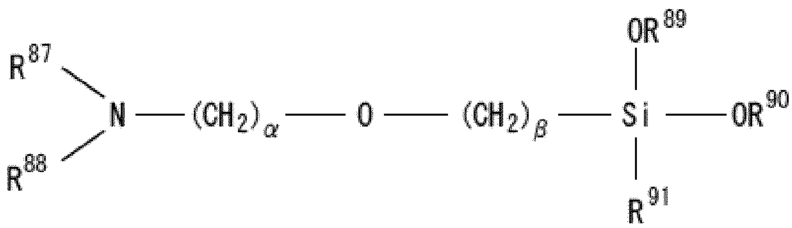

· · · · (xiii)

In the general formulas (x) to (xiii), the symbols U and V are integers that satisfy 0 to 2 and U + V = 2, respectively.

$R^{54}$ to $R^{92}$ in the general formulas (x) to (xiii) may be the same or different from each other, and are monovalent or divalent aliphatic or alicyclic hydrocarbon groups having 1 to 20 carbon atoms, or monovalent or divalent aromatic hydrocarbon groups having 6 to 18 carbon atoms.

In the general formula (xiii), $\alpha$ and $\beta$ are integers from 0 to 5.

Among the compounds satisfying the general formula (x), (xi), or (xii), in particular, N1,N1,N7,N7-tetramethyl-4-((trimethoxysilyl)methyl)heptane-1,7-diamine, 2-((hexyl-dimethoxysilyl)methyl)-N1,N1,N3,N3-2-pentamethylpropane-1,3-diamine, N1-(3-(dimethylamino)propyl)-N3,N3-dimethyl-N1-(3-(trimethoxysilyl)propyl)propane-1,3-diamine, and 4-(3-(dimethylamino)propyl)-N1,N1,N7,N7-tetramethyl-4-((trimethoxysilyl)methyl)heptane-1,7-diamine are preferred.

Also, among the compounds satisfying the general formula (xiii), in particular, N,N-dimethyl-2-(3-(dimethoxymethylsilyl)propoxy)ethanamine, N,N-bis(trimethylsilyl)-2-(3-(trimethoxysilyl)propoxy)ethanamine, N,N-dimethyl-2-(3-(trimethoxysilyl)propoxy)ethanamine, and N,N-dimethyl-3-(3-(trimethoxysilyl)propoxy)propan-1-amine are preferred.

-- Modified styrene-butadiene rubber in the second suitable aspectIt is also preferred that the aforementioned modified styrene-butadiene rubber (modified SBR) is modified by a coupling agent represented by the following general formula (I). In this case, the fuel efficiency and the wear resistance performance of tires to which the rubber composition is applied can be further improved.

[Chem. 13]

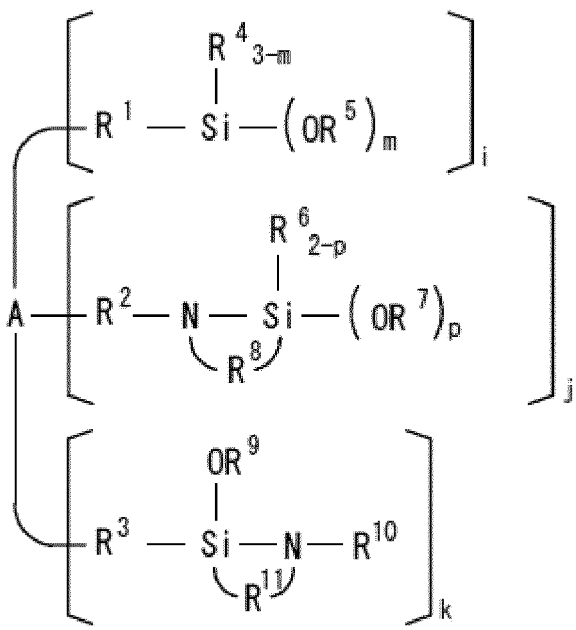

· · · · (I)

In the above general formula (I), $R^1$, $R^2$ and $R^3$ each independently indicates a single bond or an alkylene group having 1 to 20 carbon atoms.

$R^4$, $R^5$, $R^6$, $R^7$ and $R^9$ each independently indicate an alkyl group having 1 to 20 carbon atoms.

$R^8$ and $R^{11}$ each independently indicates an alkylene group having 1 to 20 carbon atoms.

$R^{10}$ indicates an alkyl or trialkylsilyl group having 1 to 20 carbon atoms.

m indicates an integer from 1 to 3, and p indicates 1 or 2.

$R^1$ to $R^{11}$, m and p are each independent when more than one exists.

i, j, and k are each independently an integer from 0 to 6. However, (i + j + k) is an integer from 3 to 10.

"A" indicates a hydrocarbon group, or an organic group having at least one atom selected from the group consisting of an oxygen atom, a nitrogen atom, a silicon atom, a sulfur atom, and a phosphorus atom and having no active hydrogen; having 1 to 20 carbon atoms.

Here, in the general formula (I), the hydrocarbon group indicated by "A" encompasses a hydrocarbon group of saturated, unsaturated, aliphatic, and aromatic. The examples of the organic group without an active hydrogen include an organic group without a functional group having active hydrogen such as a hydroxyl group (-OH), a secondary amino group (>NH), a primary amino group ($-NH_2$), sulfhydryl group (-SH).

In the styrene-butadiene rubber modified by the coupling agent represented by the above general formula (I),

it is preferred that the weight-average molecular weight (Mw) thereof is $20 \times 10^4$ to $300 \times 10^4$; the content of the modified styrene-butadiene rubber with a molecular weight of $200 \times 10^4$ to $500 \times 10^4$ relative to the total amount of the modified styrene-butadiene rubber is 0.25% by mass to 30% by mass; and the shrinkage factor (g') is less than 0.64.

In general, a polymer with a branch tends to have a smaller molecular size when compared to a linear polymer with the same absolute molecular weight, and the above shrinkage factor (g') is an index of the ratio of the size of the molecules to the linear polymer, which is assumed to have the same absolute molecular weight. That is, as the degree of branching of the polymer increases, the shrinkage factor (g') tends to decrease. In this embodiment, the intrinsic viscosity is used as a measure of molecular size, and linear polymers are used according to the formula of the intrinsic viscosity $[\eta] = -3.883M^{0.771}$. The shrinkage factor (g') for each absolute molecular weight of the modified styrene-butadiene rubber is calculated, and the average value of the shrinkage factor (g') when the absolute molecular weight is between $100 \times 10^4$ and $200 \times 10^4$ is the shrinkage factor (g') of the modified styrene-butadiene rubber. Here, the "branch" is formed by direct or indirect bonding of another polymer to one polymer. The "degree of branching" is the number of polymers directly or indirectly bound to each other for one branch. For example, when the five styrene-butadiene copolymer chains described below are bound to each other indirectly via the coupling residues described below, the degree of branching is 5. The coupling residue is a component unit of the modified styrene-butadiene rubber that is bound to the styrene-butadiene copolymer chain, and for example, is a structural unit derived from the coupling agent produced by the reaction of the styrene-butadiene copolymer and a coupling agent, which will be described below. Also, the styrene-butadiene copolymer chain is a component unit of the modified styrene-butadiene rubber, and for example, is a structural unit derived from the styrene-butadiene copolymer produced by the reaction of the styrene-butadiene copolymer and a coupling agent, which will be described below.

The shrinkage factor (g') is preferably less than 0.64, more preferably 0.63 or less, more preferably 0.60 or less, even more preferably 0.59 or less, and further preferably 0.57 or less. The lower limit of the shrinkage factor (g') is not particularly limited and may be below the detection limit, however, is preferably 0.30 or more, more preferably 0.33 or more, even more preferably 0.35 or more, and further preferably 0.45 or more. The use of the modified styrene-butadiene rubber with a shrinkage factor (g') in this range improves the processability of the rubber composition.

Since the shrinkage factor (g') tends to depend on the degree of branching, for example, the shrinkage factor (g') can be controlled using the degree of branching as an indicator. Specifically, when the modified styrene-butadiene rubber has a degree of branching of 6, the shrinkage factor (g') tends to be 0.59 or more and 0.63 or less, and when the modified styrene-butadiene rubber has a degree of branching of 8, the shrinkage factor (g') tends to be 0.45 or more and 0.59 or less.

The styrene-butadiene rubber modified by the coupling agent represented by the above general formula (I) is branched, and the degree of branching is preferably 5 or more. Also, the modified styrene-butadiene rubber has one or more coupling residues and the styrene-butadiene copolymer chains bound to the coupling residues, and more preferably, the above branch(es) includes a branch in which five or more styrene-butadiene copolymer chains are bound to one coupling residue. As a result of specifying the structure of the modified styrene-butadiene rubber so that the degree of branching is 5 or more and the branch(es) includes a branch in which five or more styrene-butadiene copolymer chains are bound to one coupling residue, the shrinkage factor (g') can be more reliably reduced to less than 0.64. Note, the number of the bound styrene-butadiene copolymer chains bound to one coupling residue can be checked from the value of the shrinkage factor (g').

In addition, the above modified styrene-butadiene rubber is branched, and the degree of branching is more preferably 6 or more. Also, the modified styrene-butadiene rubber has one or more coupling residues and the styrene-butadiene copolymer chains bound to the coupling residues, and even more preferably, the above branch(es) includes a branch in which six or more styrene-butadiene copolymer chains are bound to one coupling residue. As a result of specifying the structure of the modified styrene-butadiene rubber so that the degree of branching is 6 or more and the branch(es) includes a branch in which six or more styrene-butadiene copolymer chains are bound to one coupling residue, the shrinkage factor (g') can be more reliably reduced to 0.63 or less.

Furthermore, the above modified styrene-butadiene rubber is branched, and the degree of branching is even more preferably 7 or more and is further preferably 8 or more. The upper limit of the degree of branching is not particularly limited, but is preferably 18 or less. Also, the modified styrene-butadiene rubber has one or more coupling residues and the styrene-butadiene copolymer chains bound to the coupling residues, further preferably, the above branch(es) includes a branch in which seven or more styrene-butadiene copolymer chains are bound to one coupling residue, and particularly preferably, the above branch(es) includes a branch in which eight or more styrene-butadiene copolymer chains are bound to one coupling residue. As a result of specifying the structure of the modified styrene-butadiene rubber so that the degree of branching is 8 or more and the branch(es) includes a branch in which eight or more styrene-butadiene copolymer chains are bound to one coupling residue, the shrinkage factor (g') can be more reliably reduced to 0.59 or less.

It is preferred that at least one of the terminals of the styrene-butadiene copolymer chain is bound to silicon atoms of the coupling residues, respectively. In this case, the terminals of two or more of the styrene-butadiene copolymer chains may be bound to a single silicon atom. The terminal of the styrene-butadiene copolymer chain and an alkoxy

group having 1 to 20 carbon atoms or a hydroxyl group may be bound to a single silicon atom, resulting in that the single silicon atom constitutes an alkoxysilyl group having 1 to 20 carbon atoms or a silanol group.

The modified styrene-butadiene rubber can be an oil-extended rubber to which the stretching oil is added. The modified styrene-butadiene rubber may be non-oil-extended or oil-extended rubber, however from the standpoint of wear resistance performance, the Mooney viscosity measured at 100°C is preferably 20 or more and 100 or less, and more preferably 30 or more and 80 or less.

The weight-average molecular weight (Mw) of the modified styrene-butadiene rubber is preferably $20 \times 10^4$ or more and $300 \times 10^4$ or less, more preferably $50 \times 10^4$ or more, even more preferably $64 \times 10^4$ or more, and further preferably $80 \times 10^4$ or more. Also, the weight-average molecular weight is preferably $250 \times 10^4$ or less, more preferably $180 \times 10^4$ or less, and even more preferably $150 \times 10^4$ or less. When the weight-average molecular weight is $20 \times 10^4$ or more, the low hysteresis loss property and the wear resistance performance of the rubber composition can be sufficiently improved. Also, when the weight-average molecular weight is $300 \times 10^4$ or less, the processability of the rubber composition is improved.

It is preferred that the content of the modified styrene-butadiene rubber with a molecular weight of $200 \times 10^4$ or more and $500 \times 10^4$ or less (hereinafter, also referred to as "specific high molecular weight component") relative to the total amount of the modified styrene-butadiene rubber is 0.25% by mass or more and 30% by mass or less. When the content of the specific high molecular weight component is 0.25% by mass or more and 30% by mass or less, the low hysteresis loss property and the wear resistance performance of the rubber composition can be sufficiently improved. The modified styrene-butadiene rubber contains, of the specific high molecular weight component, preferably 1.0% by mass or more, more preferably 1.4% by mass or more, even more preferably 1.75% by mass or more, further preferably 2.0% by mass or more, especially preferably 2.15% by mass or more, and highly preferably 2.5% by mass or more. The modified styrene-butadiene rubber contains, of the specific high molecular weight component, preferably 28% by mass or less, more preferably 25% by mass or less, even more preferably 20% by mass or less, and further preferably 18% by mass or less.

In this specification, the "molecular weight" of the rubber component is a molecular weight in terms of the standard polystyrene obtained by GPC (gel permeation chromatography). To obtain the modified styrene-butadiene rubber with a specific high molecular weight component content in such a range, it is preferable to control the reaction conditions in the polymerization and reaction processes described below. For example, in the polymerization process, the amount of the organic monolithium compound to be used as a polymerization initiator, as described below, can be adjusted. Also, in the polymerization process, it is recommended to use a method with a residence time distribution, i.e., the time distribution of growth reactions is broadened, in both continuous and batch polymerization mode.

In the modified styrene-butadiene rubber, the molecular weight distribution (Mw/Mn), expressed as the ratio of the weight-average molecular weight (Mw) to the number-average molecular weight (Mn), is preferably 1.6 or more and 3.0 or less. As a result of the molecular weight distribution of the modified styrene-butadiene rubber being in this range, the rubber composition will have good processability.

The method for producing the modified styrene-butadiene rubber is not limited in any particular way, however preferably includes a polymerization process in which an organic monolithium compound is used as a polymerization initiator to copolymerize butadiene and styrene to obtain a styrene-butadiene copolymer, and a reaction process in which a reactive compound with five or more functionalities (hereinafter referred to as a "coupling agent") is reacted with the active terminal of the styrene-butadiene copolymer.

The polymerization process is preferably carried out by a growth reaction through a living anionic polymerization reaction, which can yield a styrene-butadiene copolymer with an active terminal, and thereby obtaining a modified styrene-butadiene rubber with a high modification ratio.

The styrene-butadiene copolymer is obtained by copolymerizing 1,3-butadiene and styrene.

The amount of the aforementioned organic monolithium compound used as a polymerization initiator is preferably determined by the molecular weight of the target styrene-butadiene copolymer or the modified styrene-butadiene rubber. The amount of monomer such as 1,3-butadiene, styrene, etc., used relative to the amount of the polymerization initiator used is related to the degree of polymerization, i.e., the number-average molecular weight and/or the weight-average molecular weight. Therefore, to increase the molecular weight, the amount of the polymerization initiator may be adjusted to be decreased, and to decrease the molecular weight, the amount of the polymerization initiator may be adjusted to be increased.

The organic monolithium compound is preferably an alkyl lithium compound from the viewpoint of industrial availability and ease of controlling the polymerization reaction. In this case, the styrene-butadiene copolymer with alkyl groups at the polymerization initiation terminal is obtained. The examples of the alkyl lithium compound include n-butyl lithium, sec-butyl lithium, tert-butyl lithium, n-hexyl lithium, benzyl lithium, phenyl lithium, and stilbene l lithium. As the alkyl lithium compound, n-butyl lithium and sec-butyl lithium are preferred in terms of industrial availability and ease of controlling the polymerization reaction. One of these organic monolithium compounds may be used alone, or two or more may be used in combination.

In the polymerization process, the examples of the polymerization reaction mode include a batch polymerization reaction mode and a continuous polymerization reaction mode. In the continuous mode, one or more connected reactors can be used. The reactor in the continuous mode is, for example, a tank or tube type reactor with a stirrer. In the continuous system, preferably, a monomer, inert solvent, and polymerization initiator are continuously fed into the reactor, a polymeric solution containing a polymer is obtained in the reactor, and the polymeric solution is discharged continuously. The reactor in the batch mode is, for example, a tank type reactor with a stirrer. In the batch system, preferably, a monomer, inert solvent, and polymerization initiator are fed, a monomer is added continuously or intermittently during polymerization if necessary, a polymeric solution containing a polymer is obtained in the reactor, and the polymeric solution is discharged after the polymerization is completed. To obtain a styrene-butadiene copolymer with a high percentage of active terminal in this embodiment, the continuous mode is preferred, as the polymer can be discharged continuously and used for the next reaction in a short time.

The polymerization process is preferably carried out in an inert solvent. The examples of the solvent include hydrocarbon solvents such as saturated hydrocarbons and aromatic hydrocarbons. The specific examples of the hydrocarbon solvents include, but are not limited to, aliphatic hydrocarbons such as butane, pentane, hexane, and heptane; alicyclic hydrocarbons such as cyclopentane, cyclohexane, methylcyclopentane, methylcyclohexane; aromatic hydrocarbons such as benzene, toluene, and xylene; and hydrocarbons consisting of mixtures thereof. It is preferable to treat impure allenes and acetylenes with organometallic compounds before the polymerization reaction. This tends to yield a styrene-butadiene copolymer with a high concentration of active terminal and also tends to yield a modified styrene-butadiene rubber with a high modification ratio.

In the polymerization process, polar compounds may be added. The addition of polar compounds allows styrene to be copolymerized randomly with 1,3-butadiene, and the polar compounds also tend to be used as a vinylating agent to control the microstructure of the 1,3-butadiene moiety.

As the polar compounds, for example, ethers such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, 2,2-bis(2-oxolanyl)propane; tertiary amine compounds such as tetramethylethylenediamine, dipiperidinoethane, trimethylamine, triethylamine, pyridine, quinuclidine; alkali metal alkoxide compounds such as potassium-tert-amylate, potassium-tert-butyrate, sodium -tert-butyrate, sodium-amylate; phosphine compounds such as triphenylphosphine, etc., can be used. One of these polar compounds may be used alone, or two or more may be used in combination.

In the polymerization process, the polymerization temperature is preferably 0°C or more, more preferably 120°C or less, and especially preferably 50°C or more and 100°C or less, from the viewpoint of productivity. This range tends to ensure that the amount of coupling agent reacting with the active terminals after the polymerization being completed is sufficient.

The bound butadiene content in the styrene-butadiene copolymer or the modified styrene-butadiene rubber is preferably 85% by mass or more and less than 100% by mass.

In addition, the bound styrene content in the styrene-butadiene copolymer or the modified styrene-butadiene rubber is preferably more than 0% by mass and 15% by mass or less.

As a result of the bound butadiene content and the bound styrene content being within the above range, the low hysteresis loss property and the wear resistance performance of the rubber composition can be further improved.

Note, the bound styrene content can be measured by UV absorption by phenyl groups, from which the bound butadiene content can also be determined.

In the styrene-butadiene copolymer or the modified styrene-butadiene rubber, a vinyl bond content in the butadiene bound unit is not particularly limited, but is preferably 10 mol% or more and 75 mol% or less, and more preferably 20 mol% or more and 65 mol% or less. As a result of the vinyl bond content being in the above range, the low hysteresis loss property and the wear resistance performance of the rubber composition can be further improved.

For the modified styrene-butadiene rubber, the vinyl bond content (1,2-bond content) in the butadiene bound unit can be determined by the Hampton's method [R. R. Hampton, Analytical Chemistry, 21, 923 (1949)].

The alkoxysilyl group of the coupling agent represented by the above general formula (I) tends to react with, for example, the active terminal of styrene-butadiene copolymer to dissociate alkoxylithium and form a bond between the terminal of the styrene-butadiene copolymer chain and the silicon of coupling residues. The total number of SiOR in one molecule of coupling agent minus the number of SiOR reduced by the reaction is the number of alkoxysilyl groups in the coupling residue. The azasilacycle groups of the coupling agent form >N-Li bonds and bonds between the styrene-butadiene copolymer terminals and the silicon of coupling residues. Note, that >N-Li bonds tend to easily become >NH and LiOH due to water, etc., during finishing. Also, in the coupling agents, unreacted residual alkoxysilyl groups tend to easily become silanols (Si-OH groups) due to water, etc., during finishing.

The reaction temperature in the reaction process is preferably the same as the polymerization temperature of the styrene-butadiene copolymer, more preferably 0°C or more and 120°C or less, and even more preferably 50°C or more and 100°C or less. The temperature change from after the polymerization process until the coupling agent is added

is preferably 10°C or less, and more preferably 5°C or less.

The reaction time in the reaction process is preferably 10 seconds or more, and more preferably 30 seconds or more. The time between the end of the polymerization process and the start of the reaction process is preferably less than 5 minutes, although shorter times are preferred in terms of coupling rates.

Mixing in the reaction process may be performed by mechanical stirring, stirring by a static mixer, or the like. If the polymerization process is carried out in a continuous mode, the reaction process is preferred to be carried out in a continuous mode as well. For example, a tank or tube type reactor with a stirrer is used as a reactor in the reaction process. The coupling agent may be diluted by an inert solvent and fed continuously to the reactor. If the polymerization process is carried out in a batch mode, the coupling agent may be fed into the polymerization reactor or transferred to another reactor for the reaction process.

In the above general formula (I), A is preferably represented by one of the following general formulas (II) to (V). As a result of A being represented by one of the general formulas (II) to (V), a modified styrene-butadiene rubber with better performance can be obtained.

[Chem. 14]

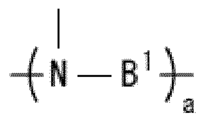

· · · · (II)

In the above general formula (II), $B^1$ indicates a single bond or a hydrocarbon group having 1 to 20 carbon atoms, and "a" indicates an integer from 1 to 10. B1 is independent of each other when more than one is present.

[Chem. 15]

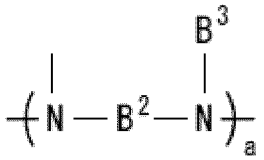

· · · · (III)

In the above general formula (III), $B^2$ indicates a single bond or a hydrocarbon group having 1 to 20 carbon atoms, $B^3$ indicates an alkyl group having 1 to 20 carbon atoms, and "a" indicates an integer from 1 to 10. $B^2$ and $B^3$ are each independent of each other when there is more than one of each.

[Chem. 16]

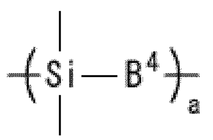

· · · · (IV)

In the above general formula (IV), $B^4$ indicates a single bond or a hydrocarbon group having 1 to 20 carbon atoms, and "a" indicates an integer from 1 to 10. $B^4$ is independent of each other when more than one is present.

[Chem. 17]

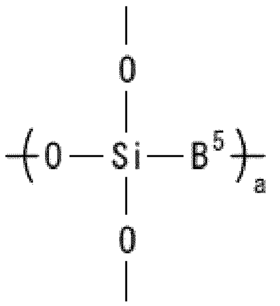

· · · · (V)

In the above general formula (V), $B^5$ indicates a single bond or a hydrocarbon group with 1 to 20 carbons, and "a" indicates an integer from 1 to 10. $B^5$ is independent of each other when more than one is present.

With respect to $B^1$, $B^2$, $B^4$, and $B^5$ in the above general formulas (II) to (V), the hydrocarbon groups having 1 to 20 carbon atoms include alkylene groups having 1 to 20 carbon atoms.

Preferably, in the above general formula (I), A is represented by the above general formula (II) or (III) and k indicates 0.

More preferably, in the above general formula (I), A is represented by the above general formula (II) or (III), k indicates 0, and in the above general formula (II) or (III), "a" indicates an integer from 2 to 10.

Even more preferably, in the above general formula (I), A is represented by the above general formula (II), k indicates 0, and in the above general formula (II), "a" indicates an integer from 2 to 10.

The examples of such coupling agents include, bis(3-trimethoxysilylpropyl)-[3-(2,2-dimethoxy-1-aza-2-silacyclopentane)propyl]amine, tris(3-trimethoxysilylpropyl)amine, tris(3-triethoxysilylpropyl)amine, tris(3-trimethoxysilylpropyl)-[3-(2,2-dimethoxy-1-aza-2-silacyclopentane)propyl]-1,3-propanediamine, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, tris(3-trimethoxysilylpropyl)-methyl-1,3-propanediamine, bis[3-(2,2-dimethoxy-1-aza-2-silacyclopentane)propyl]-(3-trimethoxysilylpropyl)-methyl-1,3-propanediamine, etc. Among these, tetrakis(3-trimethoxysilylpropyl)-1,3-propanediamine, and tetrakis(3-trimethoxysilylpropyl)-1,3-bisaminomethylcyclohexane are particularly preferred.

The amount of the compound represented by the general formula (I) added as a coupling agent can be adjusted so that the number of moles of the styrene-butadiene copolymer versus the number of moles of the coupling agent react at the desired stoichiometric ratio, which will tend to achieve the desired degree of branching. The specific number of moles of the initiator with respect to the number of moles of the coupling agent is preferably at least 5.0 times, more preferably at least 6.0 times. In this case, in the general formula (I), the number of functional groups of the coupling agent ($(m - 1) \times i + p \times j + k$) is an integer preferably from 5 to 10, and more preferably from 6 to 10.

In order to obtain the modified styrene-butadiene rubber with the above specific high-molecular component, the molecular weight distribution (Mw/Mn) of the styrene-butadiene copolymer is preferably 1.5 or more and 2.5 or less, and more preferably 1.8 or more and 2.2 or less. In addition, for the resulting modified styrene-butadiene rubber, it is preferable that a single peak is detected in the molecular weight curve by GPC.

When the peak molecular weight of the modified styrene-butadiene rubber by GPC is $Mp_1$ and the peak molecular weight of the styrene-butadiene copolymer is $Mp_2$, the following formula preferably holds.

$$(Mp_1 / Mp_2) < 1.8 \times 10 - 12 \times (Mp_2 - 120 \times 10^4)^2 + 2$$

It is more preferable that $Mp_2$ is $20 \times 10^4$ or more and $80 \times 10^4$ or less, and $Mp_1$ is $30 \times 10^4$ or more and $150 \times 10^4$ or less. $Mp_1$ and $Mp_2$ are determined by the methods described in the examples below.

The modification ratio of the modified styrene-butadiene rubber is preferably 30% by mass or more, more preferably 50% by mass or more, and even more preferably 70% by mass or more. As a result of the modification ratio of 30% by mass or more, the low hysteresis loss property and the wear resistance performance of the rubber composition can be further improved.

After the reaction process described above, inactivating agents, neutralizing agents, etc., may be added to the copolymer solution as needed. The examples of the inactivating agents include, but are not limited to: water; alcohols such as methanol, ethanol, and isopropanol, and the like. The examples of the neutralizing agents include, but are not limited to: carboxylic acids such as stearic acid, oleic acid, and versatic acid (a mixture of highly branched carboxylic

acids having 9 to 11 carbon atoms and centered at 10); aqueous solutions of inorganic acids, carbon dioxide, and the like.

It is also preferable to add an antioxidizing agent to the modified styrene-butadiene rubber from the viewpoint of preventing gel formation after polymerization and improving stability during processing. The examples of the antioxidizing agent include, 2,6-di-tert-butyl-4-hydroxytoluene (BHT), n-octadecyl-3-(4'-hydroxy-3',5'-di-tertbutylphenol)propinate, 2-methyl-4,6-bis[(octylthio)methyl]phenol, and the like.

Known methods can be used to obtain the aforementioned modified styrene-butadiene rubber from the polymeric solution. The examples of the method include, separating the solvent by steam stripping, etc., then filtering the polymer and further dehydrating and drying it to obtain the polymer, concentrating it in a flushing tank and further devolatilizing it in a vent extruder, etc., or directly devolatilizing it in a drum dryer.

The modified styrene-butadiene rubber made by reacting the styrene-butadiene copolymer with the coupling agent represented by the above general formula (I) is represented, for example, by the following general formula (VI).

[Chem. 18]

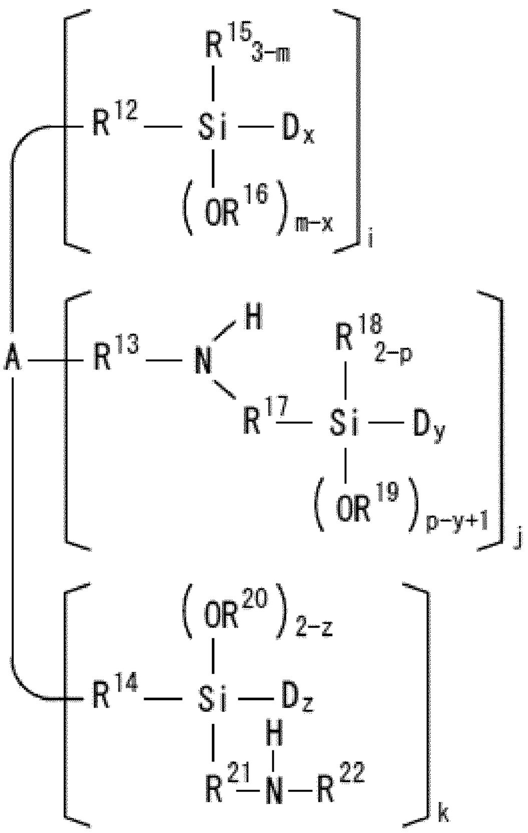

· · · · (VI)

In the general formula (VI), D indicates a styrene-butadiene copolymer chain, and the weight-average molecular weight of the styrene-butadiene copolymer chain is preferably $10 \times 10^4$ to $100 \times 10^4$. The styrene-butadiene copolymer chain is a constituent unit of the modified styrene-butadiene rubber and is a structural unit derived from the styrene-butadiene copolymer, for example, by reacting the styrene-butadiene copolymer with a coupling agent.

$R^{12}$, $R^{13}$ and $R^{14}$ each independently indicate a single bond or an alkylene group having 1 to 20 carbon atoms.

$R^{15}$ and $R^{18}$ each independently indicate an alkyl group having 1 to 20 carbon atoms.

$R^{16}$, $R^{19}$, and $R^{20}$ each independently indicate a hydrogen atom or an alkyl group having 1 to 20 carbon atoms.

$R^{17}$ and $R^{21}$ each independently indicate an alkylene group having 1 to 20 carbon atoms.

$R^{22}$ indicates a hydrogen atom or an alkyl group having 1 to 20 carbon atoms.

m and x are integers from 1 to 3, $x \leq m$, p is 1 or 2, y is an integer from 1 to 3, $y \leq (p + 1)$, and z is an integer of 1 or 2.

D, $R^{12}$ to $R^{22}$, m, p, x, y, and z, when there is more than one of each, are independent of each other and may be the same or different from each other.

"i" is an integer from 0 to 6, j is an integer from 0 to 6, k is an integer from 0 to 6, (i + j + k) is an integer from 3 to 10, and $((x \times i) + (y \times j) + (z \times k))$ is an integer from 5 to 30.

"A" represents a hydrocarbon group having 1 to 20 carbon atoms, or an organic group having at least one atom

selected from the group consisting of an oxygen atom, a nitrogen atom, a silicon atom, a sulfur atom, and a phosphorus atom and having no active hydrogen. The hydrocarbon group represented by "A" encompass saturated, unsaturated, aliphatic, and aromatic hydrocarbon groups. The examples of the organic group having no active hydrogen include an organic group without a functional group having an active hydrogen such as hydroxyl group (-OH), secondary amino group (>NH), primary amino group ($-NH_2$), sulfhydryl group (-SH), and the like.

In the above general formula (VI), A is preferably represented by one of the above general formulas (II) to (V). As a result of A being represented by any of the general formulas (II) to (V), the low hysteresis loss property and the wear resistance performance of the rubber composition can be further improved.

-- Modified styrene-butadiene rubber in the third suitable aspect --

It is also preferred that at least one terminal of the modified styrene-butadiene rubber (modified SBR) is modified with a modifying agent containing a compound (alkoxysilane) represented by the following general formula (1).

[Chem. 19]

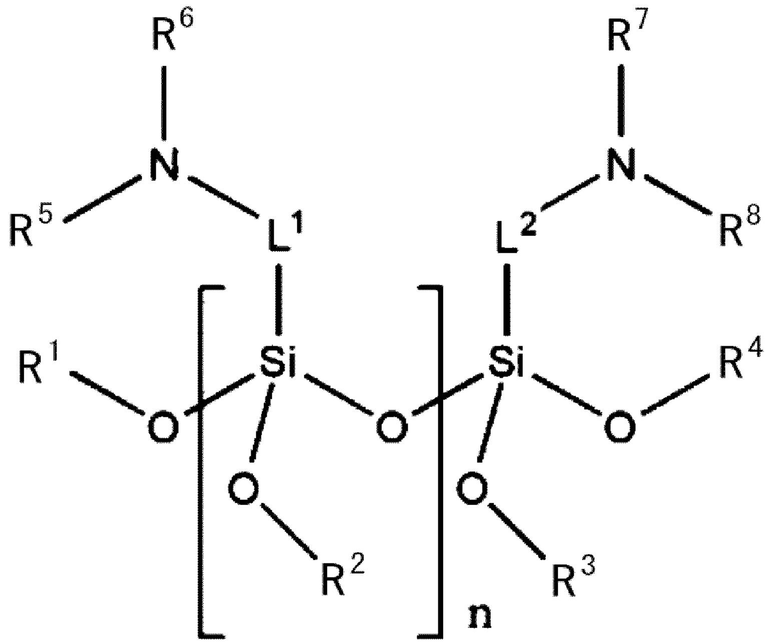

· · · · (1)

The dispersibility of fillers such as silica can be enhanced by using a styrene-butadiene rubber modified with a modifying agent containing a compound represented by the above general formula (1), that contains oligosiloxane which is a filler affinity working group, and a tertiary amino group as the aforementioned rubber component. As a result, the low hysteresis loss property of the rubber composition is greatly improved due to the improved dispersibility of the filler, and the rolling resistance of tires to which the rubber composition is applied can be reduced, thereby improving the fuel efficiency.

In the above general formula (1), $R^1$ to $R^8$ are each independently an alkyl group having 1 to 20 carbon atoms; $L^1$ and $L^2$ are each independently an alkylene group having 1 to 20 carbon atoms; n is an integer from 2 to 4.

Specifically, in the formula (1), $R^1$ to $R^4$ may be each independently a substituted or unsubstituted alkyl group having 1 to 20 carbon atoms, and when $R^1$ to $R^4$ are substituted, each can be independently substituted with one or more substituents selected from the group consisting of alkyl groups having 1 to 10 carbon atoms, cycloalkyl groups having 3 to 10 carbon atoms, alkoxy groups having 1 to 10 carbon atoms, cycloalkoxy groups having 4 to 10 carbon atoms, aryl groups having 6 to 12 carbon atoms, aryloxy groups having 6 to 12 carbon atoms, alkanoyloxy groups having 2 to 12 carbon atoms (Ra-COO-, where Ra is an alkyl group having 1 to 9 carbon atoms), aralkyloxy groups having 7 to 13 carbon atoms, arylalkyl groups having 7 to 13 carbon atoms, and alkylaryl groups having 7 to 13 carbon atoms.

More specifically, $R^1$ to $R^4$ may be a substituted or unsubstituted alkyl group having 1 to 10 carbon atoms, and more specifically, $R^1$ to $R^4$ may be each independently a substituted or unsubstituted alkyl group having 1 to 6 carbon atoms.

In the formula (1), $R^5$ to $R^8$ are each independently a substituted or unsubstituted alkyl group having 1 to 20

carbon atoms, specifically may be a substituted or unsubstituted alkyl group having 1 to 10 carbon atoms, and more specifically may be a substituted or unsubstituted alkyl group having 1 to 6 carbon atoms, and when substituted, it can be substituted with substituents as previously described for $R^1$ to $R^4$.

Note, if $R^5$ to $R^8$ are not alkyl groups but hydrolyzable substituents, the bonds of N-$R^5R^6$ and N-$R^7R^8$ are hydrolyzed to N-H in the presence of moisture, which can adversely affect the processability of the polymer.

More specifically, in the compound represented by the above formula (1), $R^1$ to $R^4$ can be methyl or ethyl groups, and $R^5$ to $R^8$ can be alkyl groups having 1 to 10 carbon atoms.

The amino groups in the compound represented by the above formula (1), namely N-$R^5R^6$ and N-$R^7R^8$, are preferably tertiary amino groups. The tertiary amino groups described above further ensures that the compound represented by the formula (1) has excellent processability when used as a modifying agent.

Note, if a protective group for protecting the amino groups or a hydrogen is bonded to $R^5$ to $R^8$, it may be difficult to realize the effect by the compound represented by the above formula (1). When a hydrogen is bonded, the anion reacts with the hydrogen during the modification process and loses reactivity, making the modification reaction itself impossible, and when a protective group is bonded, a modification reaction takes place, however it is deprotected by hydrolysis during post-processing while bound to the polymer terminal to become a primary or secondary amino group, and the deprotected primary or secondary amino group may cause the compound to become highly viscous during subsequent blending, resulting in reduced processibility.

$L^1$ and $L^2$ in the compound represented by the above formula (1) are each independently a substituted or unsubstituted alkylene group having 1 to 20 carbon atoms.

More specifically, $L^1$ and $L^2$ can each independently be an alkylene group having 1 to 10 carbon atoms, even more specifically, an alkylene group having 1 to 6 carbon atoms such as a methylene, ethylene or propylene group.

For $L^1$ and $L^2$ in the compound represented by the above formula (1), the closer the distance between the Si and N atoms in the molecule, the better the effect. However, if Si bonds directly to N, the bond between Si and N may be broken during the subsequent treatment process, and the secondary amino groups generated in this process are likely to be washed away by water during the post-treatment process, thereby in the modified styrene-butadiene rubber produced, the bonding to fillers by amino groups that promote the bonding to fillers such as silica can become difficult, resulting in reduced effectiveness in improving filler dispersion. Considering this improvement effect due to the length of the bond between Si and N, it is further preferred that $L^1$ and $L^2$ are each independently an alkylene group having 1 to 3 carbon atoms such as methylene, ethylene, or propylene groups, more specifically, can be a propylene group. In addition, $L^1$ and $L^2$ can also be substituted with substituents as previously described for $R^1$ to $R^4$.

The compound represented by the above formula (1) is preferably, for example, one of the compounds represented by the following structural formulas (1-1) to (1-5). This is because it can achieve better low hysteresis loss property.

[Chem. 20]

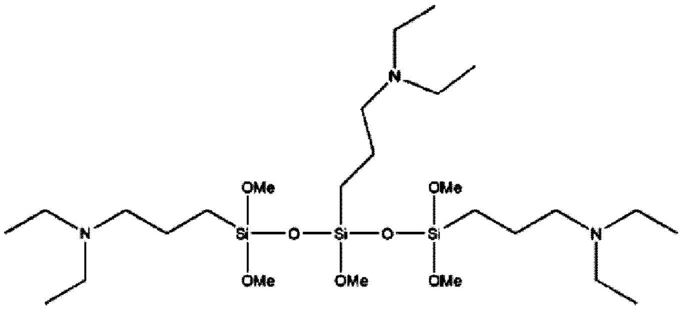

・・・・・(1-1)

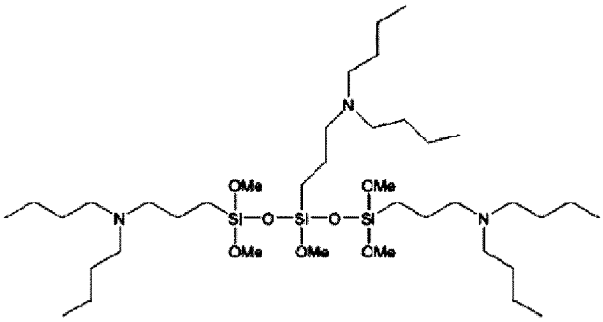

・・・・・(1-2)

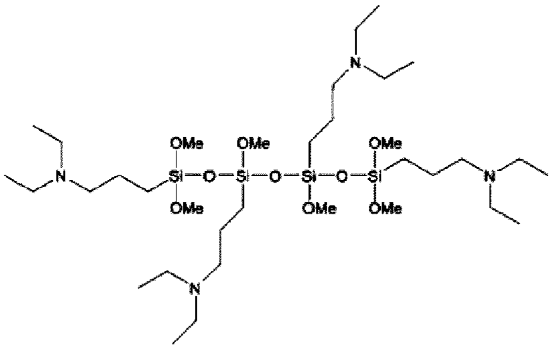

・・・・・(1-3)

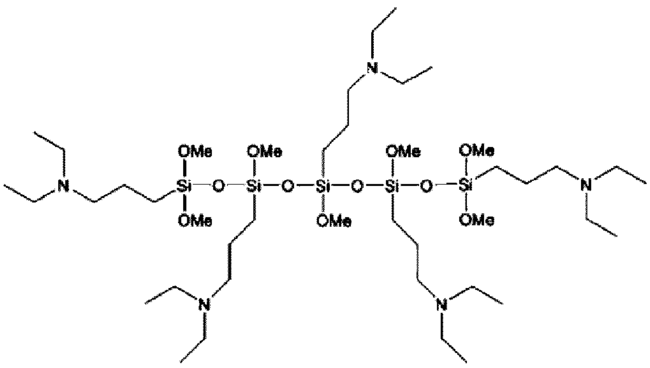

・・・・・(1-4)

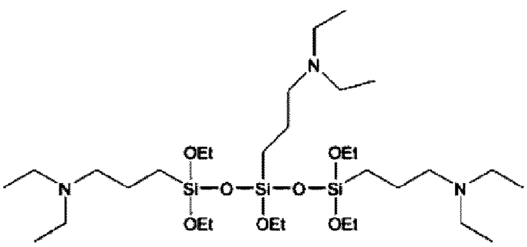

・・・・・(1-5)

The compound represented by the above formula (1) can promote the bonding of the filler to the modified styrene-butadiene rubber compared to conventional modifying agents containing one amino group in the molecule, because the alkoxysilane structure binds to the active terminal of the styrene-butadiene copolymer, while the Si-O-Si structure and three or more amino groups attached to the terminal show affinity for fillers such as silica. Further, the degree of bonding of the active terminal of the styrene-butadiene copolymer is uniform, and when the change in molecular weight distribution is observed before and after coupling, the molecular weight distribution is constant after coupling without becoming larger than before. As a result, the physical properties of the modified styrene-butadiene rubber itself do not deteriorate, the aggregation of the filler in the rubber composition can be prevented, and the dispersibility of the filler can be improved, thus improving the processability of the rubber composition. These effects, when the rubber composition is applied to tires, especially can improve both fuel efficiency and wet gripping performance in a well-balanced manner.

The compound represented by the above formula (1) can be produced through the condensation reaction represented by the following reaction scheme.

[Chem. 21]

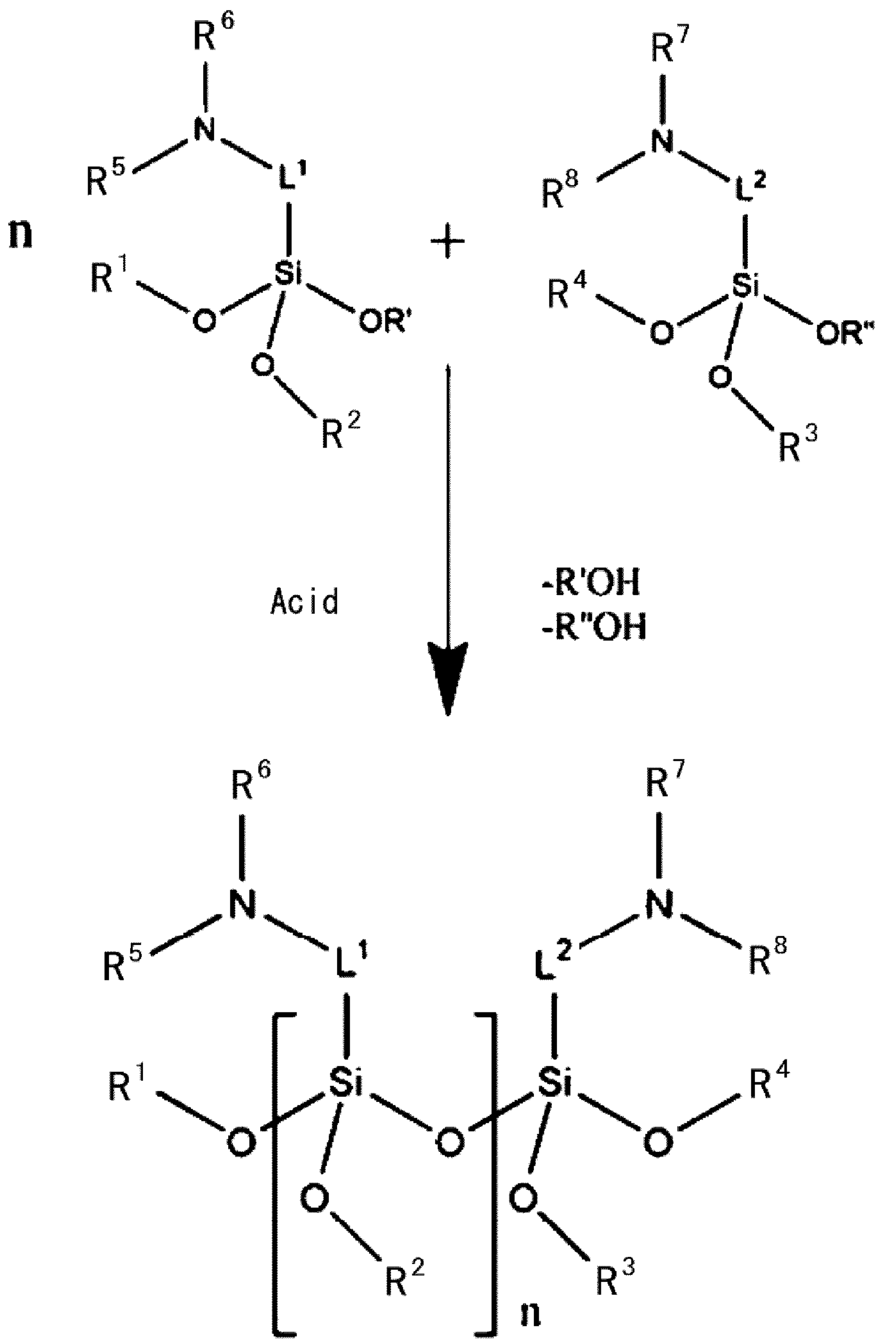


In the above reaction scheme, $R^1$ to $R^8$, $L^1$ and $L^2$, and n are the same as defined in the formula (1) above, and R' and R" are any substituent that does not affect the above condensation reaction. For example, R' and R" can be independently identical to any one of $R^1$ to $R^4$.

The reaction in the above reaction scheme proceeds in the presence of an acid, which can be used without restriction as long as the acid is generally used for condensation reactions. The person skilled in the art can select the best acid for the various process variables, such as the type of reactor in which the aforementioned reaction is carried out, starting materials, reaction temperature, etc.

The styrene-butadiene rubber modified by a modifying agent containing a compound represented by the above formula (1) has a molecular weight distribution (Mw/Mn, also referred to as the "polydispersion index (PDI)") of 1.1 to 3.0, which is narrow. If the molecular weight distribution of the modified styrene-butadiene rubber is greater than 3.0 or less than 1.1, the tensile properties and viscoelasticity may decrease when applied to the rubber composition. Considering the remarkable effect of improving tensile properties and viscoelasticity by controlling the molecular weight distribution of the modified styrene-butadiene rubber, the molecular weight distribution of the modified styrene-butadiene rubber is preferably in the range of 1.3 to 2.0. In the modified styrene-butadiene rubber, by using the modifying agent described

above, the molecular weight distribution is similar to that of the styrene-butadiene copolymer before the modification.

The molecular weight distribution of the modified styrene-butadiene rubber can be calculated from the ratio (Mw/Mn) of the weight-average molecular weight (Mw) to the number-average molecular weight (Mn). The number-average molecular weight (Mn) is the common average of the individual polymer molecular weights, calculated by measuring the molecular weights of n polymer molecules, finding the total of these molecular weights, and dividing by n. The weight-average molecular weight (Mw) represents the molecular weight distribution of the polymer composition. The average of overall molecular weight can be expressed in grams per mole (g/mol).

The weight-average molecular weight and the number-average molecular weight are the molecular weight in terms of polystyrene analyzed by the gel permeation chromatography (GPC), respectively.

In the modified styrene-butadiene rubber, at the same time of satisfying the conditions of the molecular weight distribution described above, the number-average molecular weight (Mn) is 50,000 g/mol to 2,000,000 g/mol, and more specifically, it can be 200,000 g/mol to 800,000 g/mol. In the modified styrene-butadiene rubber, the weight-average molecular weight (Mw) is 100,000 g/mol to 4,000,000 g/mol, and more specifically, it can be 300,000 g/mol to 1,500,000 g/mol.

If the weight-average molecular weight (Mw) of the modified styrene-butadiene rubber is less than 100,000 g/mol or the number-average molecular weight (Mn) thereof is less than 50,000 g/mol, the tensile properties when it is applied to the rubber composition may be decreased. If the weight-average molecular weight (Mw) exceeds 4,000,000 g/mol or the number-average molecular weight (Mn) exceeds 2,000,000 g/mol, the reduced processability of the modified styrene-butadiene rubber may deteriorate the workability of the rubber composition, making it difficult to knead and to sufficiently improve the physical properties of the rubber composition.

More specifically, in case that the modified styrene-butadiene rubber simultaneously satisfies the weight-average molecular weight (Mw) and the number-average molecular weight (Mn) conditions as well as the molecular weight distribution described above, when it is applied to a rubber composition, the viscoelasticity and processability of the rubber composition are improved in a balanced manner.

The above modified styrene-butadiene rubber preferably has a vinyl bond content in the butadiene moiety of at least 5%, more preferably at least 10%, and preferably 60% or less. As a result of setting the vinyl bond content in the butadiene moiety in the above range, the glass transition temperature can be adjusted to an appropriate range.

The modified styrene-butadiene rubber may have a Mooney viscosity (MV) at 100°C of 40 to 140, specifically 60 to 100. When having the Mooney viscosity in the above range, better processability can be demonstrated.

This Mooney viscosity can be measured with a Mooney viscometer, for example, with MV2000E produced by Monsanto Company, at 100°C and a rotor speed of 2 ± 0.02 rpm, using a large rotor. The sample used in the case can be measured by leaving the sample at room temperature (23 ± 3°C) for at least 30 minutes, then taking 27 ± 3 g of the sample, filling it inside the die cavity, and activating the platen.

As mentioned above, it is preferable that one terminal of the above modified styrene-butadiene rubber is modified by a modifying agent containing a compound represented by the above general formula (1), in addition to that, it is also preferable that the other terminal is further modified by a modifying agent containing a compound represented by the following general formula (2). As a result of both terminals of the modified styrene-butadiene rubber being modified, the dispersibility of the filler in the rubber composition is further improved, thereby a higher level of compatibility between the fuel efficiency and the wet gripping performance can be achieved for tires to which the rubber composition is applied.

[Chem. 22]

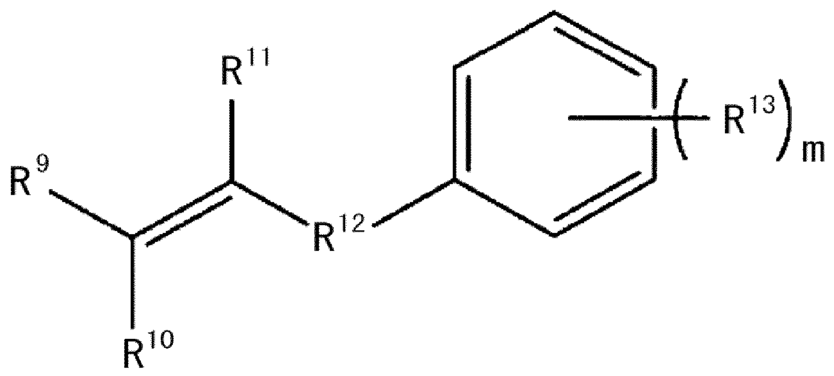

· · · · (2)

In the above general formula (2), $R^9$ to $R^{11}$ are, independently of each other, hydrogen; an alkyl group having 1 to 30 carbon atoms; an alkenyl group having 2 to 30 carbon atoms; an alkynyl group having 2 to 30 carbon atoms; a heteroalkyl group having 1 to 30 carbon atoms, a heteroalkenyl group having 2 to 30 carbon atoms; a heteroalkynyl

group having 2 to 30 carbon atoms, a cycloalkyl group having 5 to 30 carbon atoms; an aryl group having 6 to 30 carbon atoms; or a heterocyclic group having 3 to 30 carbon atoms.

In the formula (2), $R^{12}$ is a single bond; a substituted or unsubstituted alkylene group having 1 to 20 carbon atoms; a substituted or unsubstituted cycloalkylene group having 5 to 20 carbon atoms; or a substituted or unsubstituted arylene group having 5 to 20 carbon atoms. Here, the substituent is an alkyl group having 1 to 10 carbon atoms, a cycloalkyl group having 5 to 10 carbon atoms, or an aryl group having 6 to 20 carbon atoms.

In the formula (2), $R^{13}$ is an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; a heterocyclic group having 3 to 30 carbon atoms; or an active group represented by the following general formula (2a) or general formula (2b), wherein m is an integer from 1 to 5, at least one of $R^{13}$ is an active group represented by the following general formula (2a) or general formula (2b), and when m is an integer from 2 to 5, more than one $R^{13}$ may be identical or different from each other.

[Chem. 23]

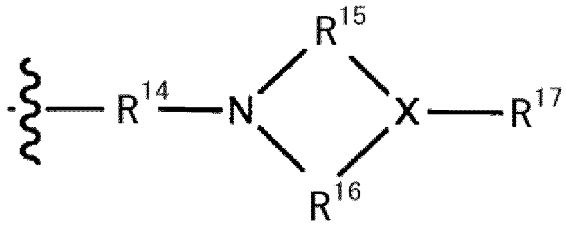

· · · · (2a)

In the above general formula (2a), $R^{14}$ is a substituted or unsubstituted alkylene group having 1 to 20 carbon atoms; a substituted or unsubstituted cycloalkylene group having 5 to 20 carbon atoms; or a substituted or unsubstituted arylene group having 6 to 20 carbon atoms. Here, the substituent is an alkyl group having 1 to 10 carbon atoms, a cycloalkyl group having 5 to 10 carbon atoms, or an aryl group having 6 to 20 carbon atoms.

In the formula (2a), $R^{15}$ and $R^{16}$ are independently of each other an alkyl group having 1 to 10 carbon atoms, a cycloalkyl group having 5 to 10 carbon atoms, or an alkylene group having 1 to 20 carbon atoms substituted or unsubstituted with an aryl group having 6 to 20 carbon atoms.

In the formula (2a), $R^{17}$ is hydrogen; an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; a heterocyclic group having 3 to 30 carbon atoms, and X is N atom, O atom or S atom. However, if X is O atom or S atom, $R^{17}$ is not present.

[Chem. 24]

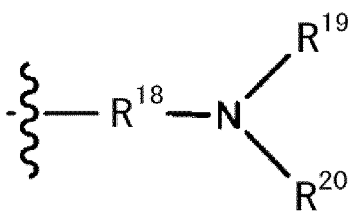

· · · · (2b)

In the above general formula (2b), $R^{18}$ is a substituted or unsubstituted alkylene group having 1 to 20 carbon atoms; a substituted or unsubstituted cycloalkylene group having 5 to 20 carbon atoms; or a substituted or unsubstituted arylene group having 6 to 20 carbon atoms. Here, the substituent is an alkyl group having 1 to 10 carbons, a cycloalkyl group having 5 to 10 carbons, or an aryl group having 6 to 20 carbons.

In the formula (2b), $R^{19}$ and $R^{20}$ are independently of each other: an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; a heterocyclic group having 3 to 30 carbon atoms.

In the compounds represented by the general formula (2), $R^9$ to $R^{11}$ are independently of each other: hydrogen; an alkyl group having 1 to 10 carbon atoms; an alkenyl group having 2 to 10 carbon atoms; or an alkynyl group having 2 to 10 carbon atoms, $R^{12}$ is a single bond; or an unsubstituted alkylene group having 1 to 10 carbon atoms, and $R^{13}$ is an alkyl group having 1 to 10 carbon atoms; an alkenyl group having 2 to 10 carbon atoms; an alkynyl group having 2 to 10 carbon atoms; or an active group represented by the above general formula (2a) or the general formula (2b). In the above general formula (2a), $R^{14}$ is an unsubstituted alkylene group having1 to 10 carbon atoms, $R^{15}$ and $R^{16}$ are, independently of each other, unsubstituted alkylene groups having 1 to 10 carbons, and $R^{17}$ is an alkyl group having 1 to 10 carbon atoms; a cycloalkyl group having 5 to 20 carbon atoms; an aryl group having 6 to 20 carbon atoms; or a heterocyclic group having 3 to 20 carbon atoms. In the above general formula (2b), $R^{18}$ is an unsubstituted alkylene group having 1 to 10 carbon atoms, and $R^{19}$ and $R^{20}$ may be, independently of each other, an alkyl group having 1 to 10 carbon atoms; a cycloalkyl group having 5 to 20 carbon atoms; an aryl group having 6 to 20 carbon atoms; or a heterocyclic group having 3 to 20 carbon atoms.

More specifically, the compounds represented by the above general formula (2) can be compounds represented by the following structural formulas (2-1) through (2-3).

[Chem. 25]

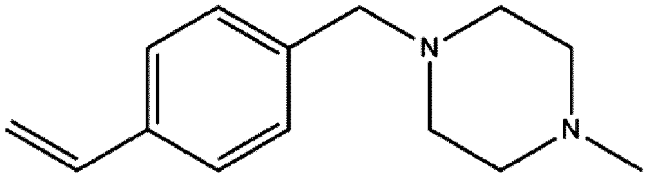

· · · · (2-1)

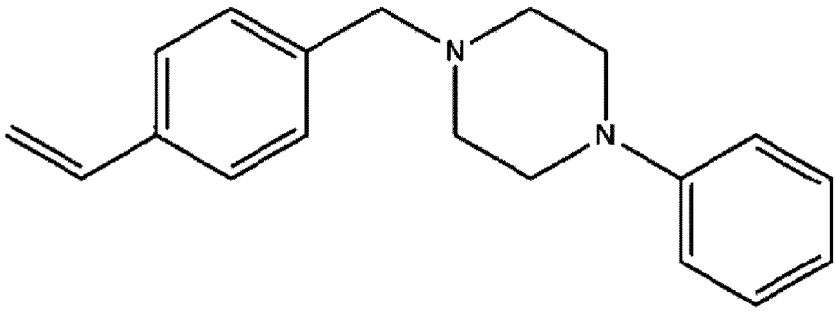

· · · · (2-2)

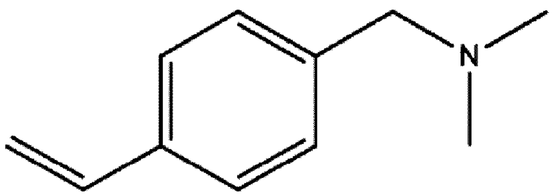

· · · · (2-3)

When the styrene-butadiene copolymer is modified by a modifying agent containing a compound represented by the above general formula (2), the modifying agent containing the compound represented by the formula (2) is used as a modifying initiator.

Specifically, for example, by polymerizing a butadiene monomer and a styrene monomer in the presence of a modifying agent containing a compound represented by the formula (2) in a hydrocarbon solvent, a modification group derived from the compound represented by the formula (2) can be imparted to the styrene-butadiene copolymer.

The aforementioned modified styrene-butadiene rubber may be used alone or in combination of two or more species.

The modified styrene-butadiene rubber having a bound styrene content of 15% by mass or less may contain an oil-extended component (extender oil), and the content of the oil-extended component, per 100 parts by mass of rubber component, is preferably 25 parts by mass or less, more preferably 20 parts by mass or less, even more preferably

15 parts by mass or less, further preferably 10 parts by mass or less, still more preferably 5 parts by mass or less, and it may not be contained (i.e., it may be 0 parts by mass).

- Other rubbers -

The rubber component may further contain other rubbers, and the content of the other rubbers in 100 parts by mass of the rubber component is preferably 35 parts by mass or less. Examples of such other rubbers include unmodified styrene-butadiene rubber (SBR), modified styrene-butadiene rubber with a bound styrene content of more than 15% by mass, butadiene rubber (BR), chloroprene rubber (CR), butyl rubber (IIR), halogenated butyl rubber, ethylene-propylene rubber (EPR, EPDM), fluorine rubber, silicone rubber, urethane rubber, and the like. Note, the butadiene rubber (BR) may be modified, and as a modifying agent of the butadiene rubber, a suitable modifying agent (coupling agent) for the modification of the modified styrene-butadiene rubber described above can be used in the same way.

(Hydrogenated resin)

The tire rubber composition of the present disclosure contains a hydrogenated resin having a softening point of higher than 100°C and a weight-average molecular weight in terms of polystyrene (g/mol) of greater than 1200 and 1600 or less. As a result of applying the rubber composition containing such hydrogenated resin to tires, it is possible to achieve a high degree of both wet gripping performance and fuel efficiency of tires.

If the softening point of the hydrogenated resin is 100°C or less, it is not possible to achieve a high degree of compatibility between the wet gripping performance and the fuel efficiency of tires. From the viewpoint of the wet gripping performance and the fuel efficiency of tires, the softening point of the hydrogenated resin is preferably 112°C or higher, and more preferably 115°C or higher.

Also, from the viewpoint of processability, the softening point of the hydrogenated resin is preferably 160°C or less, more preferably 150°C or less, even more preferably 145°C or less, further preferably 141°C or less, and still more preferably 130°C or less.

When the weight-average molecular weight (Mw) of the hydrogenated resin in terms of polystyrene is greater than 1200 g/mol, it is difficult for the hydrogenated resin to precipitate from the tire and the effect of the hydrogenated resin can be fully expressed, and when the Mw is 1600 g/mol or less, the hydrogenated resin is easily compatible with the rubber component.

From the viewpoint of preventing the precipitation of hydrogenated resin from the tire and the deterioration of tire appearance, the weight-average molecular weight of the hydrogenated resin in terms of polystyrene is preferably 1250 g/mol or more. Also, from the viewpoint of increasing the compatibility of the hydrogenated resin with the rubber component and enhancing the effect of the hydrogenated resin, the weight-average molecular weight of the hydrogenated resin in terms of polystyrene is preferably 1450 g/mol or less, and more preferably 1400 g/mol or less.

The ratio of the softening point (Ts) (unit: °C) of the hydrogenated resin to the weight-average molecular weight (Mw) (unit: g/mol) in terms of polystyrene of the hydrogenated resin (Ts/Mw) is preferably 0.05 or more, more preferably 0.08 or more, and even more preferably 0.085 or more. Also, the ratio (Ts/Mw) is preferably 0.19 or less, more preferably 0.13 or less, and even more preferably 0.1 or less.

Note, the softening point of the hydrogenated resin, as well as the weight-average molecular weight and number-average molecular weight in terms of polystyrene, can be determined by the methods described in the examples below.

The content of the hydrogenated resin is preferably 1 part by mass or more and 50 parts by mass or less with respect to 100 parts by mass of the rubber component. When the content of the hydrogenated resin in the rubber composition is 1 part by mass or more with respect to 100 mass parts of the rubber component, the effect of the hydrogenated resin is fully expressed, and when the content is 50 mass parts or less, the hydrogenated resin does not precipitate from the tire and the effect of the hydrogenated resin can be fully expressed. From the viewpoint of enhancing the effect of the hydrogenated resin, the content of the hydrogenated resin in the rubber composition is preferably 5 parts by mass or more, more preferably 7 parts by mass or more, and even more preferably 9 parts by mass or more with respect to 100 parts by mass of the rubber component. Also, from the viewpoint of preventing the precipitation of hydrogenated resin from the tire and the deterioration of tire appearance, the content of the hydrogenated resin in the rubber composition is more preferably 45 parts by mass or less, even more preferably 40 parts by mass or less with respect to 100 parts by mass of the rubber component.

The term "hydrogenated resin" means a resin obtained by reductive hydrogenation of the resin.

The examples of resins used as raw materials for the hydrogenated resins include $C_5$-based resins, $C_5$/$C_9$-based resins, $C_9$-based resins, terpene-based resins, terpene-aromatic compound-based resins, dicyclopentadiene-based resins, and the like. One of these resins may be used alone, or two or more may be used in combination.

The examples of $C_5$-based resins include aliphatic petroleum resins obtained by (co)polymerizing $C_5$ fractions obtained from the thermal cracking of naphtha in the petrochemical industry.

The $C_5$ fractions usually include olefinic hydrocarbons such as 1-pentene, 2-pentene, 2-methyl-1-butene, 2-methyl-2-butene, and 3-methyl-1-butene, and the like, and diolefinic hydrocarbons such as 2-methyl-1,3-butadiene, 1,2-pentadiene, 1,3-pentadiene, 3-methyl-1,2-butadiene, and the like. The $C_5$-based resins can be commercially available.

The $C_5/C_9$-based resins refer to $C_5/C_9$-based synthetic petroleum resins. The examples of $C_5/C_9$-based resins include, for example, solid polymers obtained by polymerizing $C_5$ to $C_{11}$ fractions derived from petroleum using a Friedel-Crafts catalyst such as $AlCl_3$, $BF_3$, etc., more specifically, copolymers mainly composed of styrene, vinyltoluene, α-methylstyrene, indene, and the like.

As for the $C_5/C_9$-based resins, resins with fewer $C_9$ or higher components are preferred from the viewpoint of compatibility with rubber components. Here, "fewer $C_9$ or higher component" shall mean that the $C_9$ or higher component in the total resin content is less than 50% by mass, and preferably 40% by mass or less. The $C_5/C_9$-based resins can be commercially available.

The $C_9$-based resins refer to $C_9$-based synthetic petroleum resins, for example, solid polymers obtained by polymerizing $C_9$ fractions using a Friedel-Crafts type catalyst such as $AlCl_3$ or $BF_3$.

The examples of $C_9$ resins include copolymers with indene, α-methylstyrene, vinyltoluene, etc., as major components.

The terpene-based resins are solid resins obtained by blending turpentine oil, obtained at the same time as rosin is obtained from pine trees, or polymerized components separated from it, and being polymerized using a Friedel-Crafts type catalyst. The examples of terpene-based resins include β-pinene resin, α-pinene resin, and the like. There are no restrictions on the raw material terpenes, and monoterpene hydrocarbons such as α-pinene and limonene are preferred, those containing α-pinene are more preferred, and α-pinene is especially preferred.

The terpene-aromatic compound-based resins are obtained by copolymerizing terpenes and aromatic compounds. For example, it can be produced by reacting, in the presence of a Friedel-Crafts type catalyst such as $AlCl_3$ or $BF_3$, in an organic solvent such as toluene.

The terpenes are compounds with a basic skeleton of terpenes classified as monoterpenes ($C_{10}H_{16}$), sesquiterpenes ($C_{15}H_{24}$), diterpenes ($C_{20}H_{32}$), and the like. The examples of terpenes include α-pinene, β-pinene, calene (δ-3-calene), dipentene, limonene, myrcene, allo-osimene, osimene, α-phellandrene, α-terpinene, γ-terpinene, terpinolene, 1,8-cineole, 1,4-cineole, α-terpineol, β-terpineol, γ-terpineol, and the like. There are no restrictions on the raw material terpenes, and monoterpene hydrocarbons such as α-pinene and limonene are preferred, those containing α-pinene are more preferred, and α-pinene is especially preferred.

The aromatic compounds include styrene and its derivatives such as styrene, alkylstyrene, alkoxystyrene, and styrene containing unsaturated hydrocarbon groups; phenol compounds such as phenol, alkylphenol, alkoxyphenol, phenol containing unsaturated hydrocarbon groups; and naphthol compounds such as naphthol, alkylnaphthol, alkoxynaphthol, naphthol containing unsaturated hydrocarbon groups, and the like. Among these, styrene is preferred.

The terpene-aromatic compound-based resins include, specifically, a terpene-styrene resin and a terpene-phenol resin.

The dicyclopentadiene-based resins are resins obtained by polymerizing dicyclopentadiene using, for example, a Friedel-Crafts type catalyst such as $AlCl_3$ or $BF_3$.

The hydrogenated resin preferably contains a terpene-derived moiety. As a result of the hydrogenated resin containing a terpene-derived moiety, the compatibility between the hydrogenated resin and the isoprene skeleton rubber is improved, and the compatibility between the hydrogenated resin and the rubber component is enhanced, further improving the wet gripping performance and the fuel efficiency of tires. Note, in the terpene-derived moiety, the terpene-derived double bond may be hydrogenated.

The hydrogenated resin preferably further contains a styrene-derived moiety. As a result of the hydrogenated resin containing a styrene-derived moiety, the compatibility between the hydrogenated resin and the aforementioned modified styrene-butadiene rubber is improved, and the compatibility between the hydrogenated resin and the rubber component is enhanced, further improving the wet gripping performance and the fuel efficiency of tires. Note, in the styrene-derived moiety, the benzene ring derived from styrene may be hydrogenated to a cyclohexane ring, and the like.

From the viewpoint of increasing the compatibility between the rubber component and the hydrogenated resin, and improving the wet gripping performance and lowering the rolling resistance of tires to which the rubber composition is applied, the hydrogenated resin is preferably at least one selected from the group consisting of a hydrogenated $C_5$-based resin, a hydrogenated $C_5/C_9$-based resin, a hydrogenated terpene-based resin, a hydrogenated terpene-aromatic compound-based resin, a hydrogenated dicyclopentadiene-based resin (hydrogenated DCPD-based resin), more preferably at least one selected from the group consisting of a hydrogenated terpene-based resin and a hydrogenated terpene-aromatic compound-based resin, and especially preferably a hydrogenated styrene-terpene resin.

(Silica)

The tire rubber composition of this disclosure contains silica. The silica contributes to the improvement of wet

gripping performance and fuel economy performance of tires to which the rubber composition is applied.

The silica preferably has a nitrogen adsorption specific surface area (BET method) of 100 $m^2/g$ or more and less than 330 $m^2/g$. If the nitrogen adsorption specific surface area (BET method) of silica is 100 $m^2/g$ or more, tires to which the rubber composition is applied can be sufficiently reinforced and the rolling resistance of the tires can be further reduced. Also, if the nitrogen adsorption specific surface area (BET method) of silica is less than 330 $m^2/g$, the elastic modulus of the rubber composition is not too high, and the wet gripping performance of tires to which the rubber composition is applied is further improved. From the viewpoint of lowering the rolling resistance and further improving the tire wear resistance, the nitrogen adsorption specific surface area (BET method) of silica is preferably 130 $m^2/g$ or more, and even more preferably 150 $m^2/g$ or more. Also, from the viewpoint of further improving the wet gripping performance of tires, the nitrogen adsorption specific surface area (BET method) of silica is preferably 300 $m^2/g$ or less, more preferably 280 $m^2/g$ or less, and even more preferably 270 $m^2/g$ or less.

The examples of silica include wet silica (hydrous silica), dry silica (anhydrous silica), calcium silicate, aluminum silicate, and the like, among which the wet silica is preferred. One of these silicas may be used alone, or two or more may be used in combination.

From the viewpoint of improving the mechanical strength of the tire and further improving the wear resistance, the content of silica in the rubber composition is preferably 40 parts by mass or more, more preferably 45 parts by mass or more, even more preferably 50 parts by mass or more, and further preferably 55 parts by mass or more with respect to 100 parts by mass of the rubber component. Also, from the viewpoint of further improving the wet gripping performance of the tire, the content of silica in the rubber composition is preferably 125 parts by mass or less, more preferably 105 parts by mass or less, even more preferably 100 parts by mass or less, and further preferably 95 parts by mass or less with respect to 100 parts by mass of the rubber component.

(Carbon Black)

The tire rubber composition of this disclosure contains carbon black. The carbon black can reinforce the rubber composition and improve the wear resistance performance of the rubber composition.

The carbon black is not particularly limited, and the examples thereof include GPF, FEF, HAF, ISAF, and SAF grade carbon blacks. One of these carbon blacks may be used alone, or two or more may be used in combination.

From the viewpoint of improving the wear resistance performance of the rubber composition and tires to which it is applied, the content of carbon black in the rubber composition is preferably 1 part by mass or more, more preferably 3 parts by mass or more, and even more preferably 5 parts by mass or more with respect to 100 parts by mass of the rubber component. Also, from the viewpoint of workability of the rubber composition, the content of carbon black in the rubber composition is preferably 20 parts by mass or less, and more preferably 15 parts by mass or less with respect to 100 parts by mass of the rubber component.

The percentage of silica in the total amount of the silica and the carbon black is 50% by mass or more and less than 100% by mass. As a result of the silica content of 50% by mass or more, the mechanical strength of tires to which the rubber composition is applied is improved and the rolling resistance can be made lower.

Further, the percentage of silica in the total amount of the silica and the carbon black is preferably 85% by mass or more and less than 100% by mass. As a result of the silica content of 85% by mass or more, the mechanical strength of tires to which the rubber composition is applied is improved and the rolling resistance can be made lower.

(Others)

The tire rubber composition according to this disclosure may contain the previously mentioned rubber component, hydrogenated resin, silica and carbon black, and various components normally used in the rubber industry, such as fillers other than silica and carbon black, silane coupling agents, antioxidants, waxes, softening agents, processing aids, stearic acid, zinc oxide (zinc white), vulcanization accelerators, vulcanizing agents, etc., may be selected and contained as appropriate to the extent that they do not impair the purpose of this disclosure. These compounding agents can be commercially available.

The tire rubber composition according to this disclosure preferably contains a silane coupling agent to improve the effect of the silica described above. The examples of silane coupling agent include bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzothiazolyl tetrasulfide, 3-triethoxysilylpropyl methacrylate monosulfide, 3-trimethoxysilylpropyl methacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide, dimethoxymethylsilylpropylbenzothiazolyl tetrasulfide, and the like. The content of the silane coupling agent is preferably in the range of 2 to 20 parts by mass, and more preferably in the range of 5 to 15 parts by mass per 100 parts by mass of the silica.

The examples of the aforementioned antioxidants include, N-(1,3-dimethylbutyl)-N'-phenyl-p-phenylenediamine (6C), 2,2,4-trimethyl-1,2-dihydroquinoline polymer (TMDQ), 6-ethoxy-2,2,4-trimethyl-1,2-dihydroquinoline (AW), N,N'-diphenyl-p-phenylenediamine (DPPD), and the like. The content of the antioxidant is not restricted, and is preferably in the range of 0.1 to 5 parts by pass, and more preferably in the range of 1 to 4 parts by mass per 100 parts by mass of the aforementioned rubber component.

The examples of the aforementioned waxes include paraffin wax, microcrystalline wax, and the like. The content of the wax is not restricted, and is preferably in the range of 0.1 to 5 parts by mass, and more preferably 1 to 4 parts by mass per 100 parts by mass of the rubber component.

The content of zinc oxide (zinc white) is not restricted, and is preferably in the range of 0.1 to 10 parts by mass, and more preferably 1 to 8 parts by mass per 100 parts by mass of the rubber component.

The examples of the aforementioned vulcanization accelerators include sulfenamide-based vulcanization accelerators, guanidine-based vulcanization accelerators, thiazole-based vulcanization accelerators, thiuram-based vulcanization accelerators, dithiocarbamate-based vulcanization accelerators, and the like. One or more of these vulcanization accelerators may be used alone or in combination. The content of the vulcanization accelerator is not restricted, and is preferably in the range of 0.1 to 5 parts by mass, and more preferably in the range of 0.2 to 4 parts by mass per 100 parts by mass of the rubber component.

The examples of the aforementioned vulcanizing agents include sulfur and the like. The content of the vulcanizing agent is preferably in the range of 0.1 to 10 parts by mass, and more preferably in the range of 1 to 4 parts by mass, as sulfur content, per 100 parts by mass of the rubber component.

(Method of producing rubber composition)

The method of producing the aforementioned rubber composition is not particularly limited, but can be made, for example, by blending the aforementioned rubber component, hydrogenated resin, silica, and carbon black with various components selected as needed, and then kneading, warming, extruding, and the like. The resulting rubber composition can be vulcanized to make vulcanized rubber.

There are no restrictions on the conditions for kneading, and the various conditions such as the feed volume, rotor rotation speed, ram pressure, etc., as well as the kneading temperature, kneading time, and type of kneading equipment can be selected as appropriate for the purpose. The examples of the kneading equipment include a Banbury mixer, intermixes, kneaders, rolls, etc., which are normally used for kneading rubber compositions.

There are no restrictions on the conditions of warming, and various conditions such as warming temperature, warming time, and warming apparatus can be selected as appropriate for the purpose. The examples of the warming apparatus include a warming roller device, etc., which is usually used for warming of rubber compositions.

There are no restrictions on the conditions of extruding, and various conditions such as extruding time, extruding speed, extruding apparatus, extruding temperature, etc., can be selected as appropriate for the purpose. The examples of the extruding apparatus include the extruders normally used for extruding rubber compositions. The extruding temperature can be determined as appropriate.

There are no particular restrictions on the apparatus, method, conditions, etc., for performing the aforementioned vulcanization, which may be selected as appropriate for the purpose. The examples of the equipment for vulcanization include molding and vulcanizing machines with molds normally used for vulcanizing rubber compositions. As a condition for vulcanization, the temperature is, for example, about 100 to 190°C.

<Tread Rubber>

The tread rubber according to this disclosure is characterized by comprising the tire rubber composition described above. Since the tread rubber according to this disclosure comprises the tire rubber composition described above, when applied to tires, it is possible to achieve a high degree of compatibility between the wet gripping performance and the fuel efficiency of the tire.

Note, the tread rubber according to this disclosure may be applied to new tires or retreaded tires.

<Tire>

The tire according to this disclosure is characterized by comprising the tread rubber described above. Such a tire of this disclosure has a high degree of wet gripping performance and fuel efficiency.

Depending on the type of tire to be applied, the tire according to this disclosure may be obtained by vulcanizing

the tire after molding using an unvulcanized rubber composition, or by further vulcanizing the tire after molding using semi-vulcanized rubber that has undergone a pre-vulcanization process or the like. The tire according to this disclosure is preferably a pneumatic tire, and inert gases such as nitrogen, argon, helium, etc., as well as normal or oxygen partial pressure-controlled air, can be used as gases to fill the pneumatic tire.

EXAMPLES

The present disclosure is described in more detail below with examples, however this disclosure is not limited in any way to the following examples.

<Analytical method for rubber component>

The bound styrene content in the modified styrene-butadiene rubber was measured by the following method.

(1) Bound styrene content

Using the synthesized modified styrene-butadiene rubber as a sample, 100 mg of the sample was made up to 100 mL with chloroform and dissolved to obtain a measurement sample. Based on the absorption of a phenyl group of styrene at the ultraviolet absorption wavelength (in the vicinity of 254 nm), the bound styrene content (mass%) with respect to 100 mass% of the sample was measured. As a measuring device, a spectrophotometer "UV-2450" produced by Shimadzu Corporation was used.

<Analytical method for hydrogenated resin>

The softening point, weight-average molecular weight, and number-average molecular weight of the hydrogenated resin were measured by the following methods.

(2) Softening point

The softening point (Ts) of the hydrogenated resin was measured in accordance with JIS-K2207-1996 (circular ball method).

(3) Weight-average molecular weight and number-average molecular weight

The average-molecular weight of the hydrogenated resin was determined by gel permeation chromatography (GPC) under the following conditions, and the weight-average molecular weight and the number-average molecular weight in terms of polystyrene were calculated.

· Column temperature: 40°C
· Injection volume: 50 μL
· Carrier and flow rate: Tetrahydrofuran 0.6 mL/min
· Sample preparation: About 2.5 mg of resin component was dissolved in 10 mL of tetrahydrofuran.

<Preparation of rubber composition>

The rubber compositions in Examples and Comparative examples were prepared by blending and kneading each component according to the formulation shown in Table 1. The kneading was performed as the first kneading stage and the second kneading stage separately. The used resins are shown in Tables 2 and 3.

[Table 1]

| | | | Formula A | Formula B |
|---|---|---|---|---|
| First kneading stage | NR *1 | Part by mass | 30 | 70 |
| | Modified SBR *2 | | 70 | 30 |
| | Carbon black *3 | | 5 | 5 |
| | Silica *4 | | 65 | 65 |
| | Resins *5 | | 30 | 30 |
| | Stearic acid | | 1 | 1 |
| | Zinc white | | 1 | 1 |
| | Antioxidant *6 | | 2 | 2 |
| | Oil *7 | | 2 | 2 |
| | Wax *8 | | 1 | 1 |
| | Silane coupling agent *9 | | 5.2 | 5.2 |
| Second kneading stage | Zinc white | Part by mass | 1.5 | 1.5 |
| | Vulcanization accelerator A *10 | | 1.85 | 1.85 |
| | Vulcanization accelerator B *11 | | 0.85 | 0.85 |
| | Sulfur | | 2.05 | 2.05 |

*1 NR: Natural rubber, TSR #20
*2 Modified SBR: Modified styrene-butadiene rubber synthesized by the following method, and the bound styrene content = 10% by mass.
*3 Carbon black: Product name "SEAST 7HM" manufactured by Tokai Carbon Co., Ltd.
*4 Silica: Product name "Nipsil AQ" manufactured by Tosoh Silica Corporation
*5 Resins: The types of resins used are shown in Tables 2 and 3.
*6 Antioxidant: Product name "NOCRAC 6C" manufactured by Ouchi Shinko Chemical Industrial Co., Ltd.
*7 Oil: Product name "Super Oil Y22" manufactured by ENEOS Corporation
*8 Wax: Product name "OZOACE 0701" manufactured by Nippon Seiro Co., Ltd.
*9 Silane coupling agent: Product name "Si75" manufactured by Evonik Degussa Co., Ltd.
*10 Vulcanization accelerator A: Product name "SANCELER CM-G" manufactured by Sanshin Chemical Industry Co., Ltd.
*11 Vulcanization accelerator B: Product name "SANCELER DM-TG" manufactured by Sanshin Chemical Industry Co., Ltd.

<Synthesis method of modified SBR (*2)>

To a dry, 800mL pressure-resistant glass vessel purged with nitrogen, a cyclohexane solution of 1,3-butadiene and a cyclohexane solution of styrene were added to reach 67.5 g of 1,3-butadiene and 7.5 g of styrene, and after adding 0.6 mmol of 2,2-ditetrahydrofurylpropane and 0.8 mmol of n-butyl lithium, polymerization was carried out at 50°C for 1.5 hours. To the polymerization reaction system in which the polymerization conversion was almost 100%, 0.72 mmol of N-bis(trimethylsilyl)-3-[diethoxy(methyl)silyl] propylamine was added as a modifying agent, and the modification reaction was carried out at 50°C for 30 minutes. Then, 2 mL of an isopropanol solution containing 5% by mass of 2,6-di-t-butyl-p-cresol (BHT) was added to stop the reaction, and it was dried according to the usual method to obtain a modified SBR.

The microstructure of the resulting modified SBR was measured and the bound styrene content was 10% by mass.

<Preparation and evaluation of vulcanized rubber>

The resulting rubber compositions of the Examples and Comparative Examples were vulcanized at 145°C for 33 minutes to obtain the test specimens of vulcanized rubber. The wet gripping performance and the fuel efficiency were evaluated on the obtained vulcanized rubber specimens by the following methods. The results are shown in Tables 2 and 3.

(4) Wet gripping performance

The loss tangent (tan δ) of the test specimens was measured at a temperature of 0°C using a spectrometer manufactured by Ueshima Seisakusho Co., Ltd. The evaluation results are shown in Table 2 indexed with the tan δ of Comparative Example 1 set to 100, and in Table 3 indexed with the tan δ of Comparative Example 2 set to 100. The larger the index value, the larger the tan δ, indicating superior wet gripping performance.

(5) Fuel Efficiency

The loss tangent (tan δ) of the specimens was measured using a viscoelasticity measuring device under conditions of a temperature of 30°C, a strain of 10%, and a frequency of 10 Hz. In Table 2, the evaluation results are indexed with the reciprocal of tan δ of Comparative Example 1 set to 100, and in Table 3, indexed with the reciprocal of tan δ of Comparative Example 2 set to 100. The larger the index value, the smaller the tan δ, indicating superior fuel efficiency.

[Table 2]

| | | Comparative Example 1 | Example 1 |
|---|---|---|---|
| Formulation | - | Formula A | |
| Resin types | - | Hydrogenated $C_9$-based resin *12 | Hydrogenated styrene-terpene resin *13 |
| Wet gripping performance | Index | 100 | 111 |
| Fuel efficiency | Index | 100 | 99 |
| Total | Index | 200 | 210 |

[Table 3]

| | | Comparative Example 2 | Example 2 | Example 3 |
|---|---|---|---|---|
| Formulation | - | Formula B | | |
| Resin types | - | Hydrogenated $C_9$-based resin *12 | Hydrogenated styrene-terpene resin *13 | Hydrogenated terpene resin *14 |
| Wet gripping performance | Index | 100 | 115 | 114 |
| Fuel efficiency | Index | 100 | 99 | 108 |
| Total | Index | 200 | 214 | 222 |

*12 Hydrogenated $C_9$-based resin: Product name "ARKON M135" manufactured by Arakawa Chemical Industries, Ltd., in which the softening point (Ts) = 135°C, weight-average molecular weight (Mw) = 1613 g/mol, number-average molecular weight (Mn) = 972 g/mol, and alicyclic saturated hydrocarbon resin.
*13 Hydrogenated styrene-terpene resin: Product name "CLEARON M125" manufactured by Yasuhara Chemical Co., Ltd., in which the softening point (Ts) = 125°C, weight-average molecular weight (Mw) = 1363 g/mol, number-average molecular weight (Mn) = 863 g/mol.
*14 Hydrogenated terpene resin: Product name "CLEARON P125" manufactured by Yasuhara Chemical Co., Ltd., in which the softening point (Ts) = 125°C, weight-average molecular weight (Mw) = 1307 g/mol, number-average molecular weight (Mn) = 622 g/mol.

From the Tables 2 and 3, it can be seen that the rubber compositions of the Examples according to this disclosure are highly balanced in the wet gripping performance and the fuel efficiency.

## Claims

1. A tire rubber composition containing,

a rubber component containing an isoprene skeleton rubber and a modified styrene-butadiene rubber with a bound styrene content of 15% by mass or less;
a hydrogenated resin having a softening point of higher than 100°C and a weight-average molecular weight in terms of polystyrene (g/mol) of greater than 1200 and 1600 or less;
silica; and
carbon black,
wherein a percentage of silica in the total amount of said silica and said carbon black is 50% by mass or more and less than 100% by mass.

**2.** The tire rubber composition according to claim 1, wherein said hydrogenated resin contains a terpene-derived moiety.

**3.** The tire rubber composition according to claim 2, wherein said hydrogenated resin further contains a styrene-derived moiety.

**4.** The tire rubber composition according to any one of claims 1 to 3, wherein the percentage of silica in the total amount of said silica and said carbon black is 85% by mass or more and less than 100% by mass.

**5.** A tread rubber comprising the tire rubber composition according to any one of claims 1 to 4.

**6.** A tire comprising the tread rubber according to claim 5.

**INTERNATIONAL SEARCH REPORT**

International application No.
**PCT/JP2022/010133**

**A. CLASSIFICATION OF SUBJECT MATTER**

***B60C 1/00***(2006.01)i; ***C08C 19/25***(2006.01)i; ***C08L 7/00***(2006.01)i; ***C08L 9/00***(2006.01)i; ***C08L 15/00***(2006.01)i; ***C08L 57/00***(2006.01)i; ***C08L 101/00***(2006.01)i; ***C08K 3/04***(2006.01)i; ***C08K 3/36***(2006.01)i
FI: C08L15/00; C08L57/00; C08K3/36; C08K3/04; C08L101/00; C08L7/00; C08L9/00; C08C19/25; B60C1/00 A

According to International Patent Classification (IPC) or to both national classification and IPC

**B. FIELDS SEARCHED**

Minimum documentation searched (classification system followed by classification symbols)

B60C1/00; C08C19/25; C08L7/00; C08L9/00; C08L15/00; C08L57/00; C08L101/00; C08K3/04; C08K3/36

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-45073 A (SUMITOMO RUBBER IND., LTD.) 26 March 2020 (2020-03-26) claims, paragraphs [0040], [0043], [0047], [0055], [0090], [0096], [0098], examples, resin 2 | 1-6 |
| A | JP 2019-73579 A (SUMITOMO RUBBER IND., LTD.) 16 May 2019 (2019-05-16) | 1-6 |
| A | JP 2021-54377 A (SUMITOMO RUBBER IND., LTD.) 08 April 2021 (2021-04-08) | 1-6 |
| A | WO 2015/076048 A1 (SUMITOMO RUBBER IND., LTD.) 28 May 2015 (2015-05-28) | 1-6 |
| A | JP 2014-214297 A (SUMITOMO RUBBER IND., LTD.) 17 November 2014 (2014-11-17) | 1-6 |
| A | WO 2019/117168 A1 (BRIDGESTONE CORP.) 20 June 2019 (2019-06-20) | 1-6 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 April 2022** | **17 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/010133**

| Patent document cited in search report | Publication date (day/month/year) | Patent family member(s) | Publication date (day/month/year) |
|---|---|---|---|
| JP 2020-45073 A | 26 March 2020 | EP 3626482 A1<br>claims, paragraphs [0045], [0049], [0053], [0062], [0106]-[0108], examples, resin 2 | |
| JP 2019-73579 A | 16 May 2019 | EP 3470459 A1 | |
| JP 2021-54377 A | 08 April 2021 | EP 3800220 A1 | |
| WO 2015/076048 A1 | 28 May 2015 | EP 3064543 A1<br>CN 105764974 A | |
| JP 2014-214297 A | 17 November 2014 | EP 2799480 A1<br>CN 104130461 A | |
| WO 2019/117168 A1 | 20 June 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- WO 2015079703 A1
- WO 2003046020 A1
- JP 2007217562 A

### Non-patent literature cited in the description

- **R. R. HAMPTON.** *Analytical Chemistry,* 1949, vol. 21, 923